# EUROPÄISCHE PATENTSCHRIFT

(11) **EP 2 372 172 B1**
(45) Veröffentlichungstag und Bekanntmachung des Hinweises auf die Patenterteilung: **05.08.2015**
(21) Anmeldenummer: 11158210.2
(22) Anmeldetag: 15.03.2011
(51) Int. Cl.: F16B 7/10

(54) **Vorrichtung mit mindestens zwei relativ zueinander bewegbaren Teilen**
Device with at least two parts that can be moved relative to each other
Dispositif doté d'au moins deux éléments mobiles l'une par rapport à l'autre

(30) Priorität: 16.03.2010 DE 202010003706 U
(43) Veröffentlichungstag der Anmeldung: 05.10.2011
(73) Patentinhaber: DewertOkin GmbH, 32278 Kirchlengern (DE)
(72) Erfinder: Roither, Andreas, 32130, Enger (DE); Both, Carsten, 32429, Minden (DE)
(74) Vertreter: Lippert, Stachow & Partner

(56) Entgegenhaltungen:
- WO-A1-2007/061358
- US-B1- 6 755 590

## Beschreibung

Die Erfindung betrifft eine Vorrichtung mit mindestens zwei relativ zueinander entlang von Gleitflächen bewegbaren Teilen, wobei an mindestens einem ersten Teil ein Gleitlager mit einer ersten Gleitfläche angeordnet ist, die einer an einem zweiten Teil vorgesehenen zweiten Gleitfläche gegenüberliegt, das Gleitlager ein Gleitelement, an dem die erste Gleitfläche ausgebildet ist und an dessen von der ersten Gleitfläche wegweisenden Seite eine gegenüber der ersten Gleitfläche geneigte, erste Anlagefläche vorgesehen ist, und ein Stellelement umfasst, das mit einer zweiten Anlagefläche in einer Betätigungsrichtung verschiebbar an der ersten Anlagefläche anliegt und sich dabei mit einer von der zweiten Anlagefläche wegweisenden dritten Anlagefläche auf dem ersten Teil abstützt, so dass durch Verschiebung des Stellelements in seiner Betätigungsrichtung das Gleitelement mit der ersten Gleitfläche auf die zweite Gleitfläche des zweiten Teils zu bewegbar ist.

Insbesondere betrifft die Erfindung eine Teleskopsäule mit mindestens zwei ineinander angeordneten rohrförmigen Teilen, die die vorstehend genannten Merkmale aufweist. Eine derartige Teleskopsäule kann insbesondere als Hubsäule ausgelegt sein, die vorwiegend für den Möbelsektor, z.B. bei höhenverstellbaren Tischen, Betten, etc., angewandt wird. Andere Einsatzgebiete kommen ebenfalls in Frage. Bei einer solchen Teleskopsäule können ein oder mehrere Gleitlager bei mindestens zwei ineinander angeordneten rohrförmigen Teilen an einer oder mehreren Außenseiten des innen liegenden Teils und/oder an einer oder mehreren Innenseiten des außen liegenden Teils angeordnet sein.

Vorrichtungen bzw. Teleskopsäulen der vorstehend genannten Art sind in verschiedenen Varianten aus dem Stand der Technik bekannt. Um den Raum zwischen den relativ zueinander bewegbaren Teilen möglichst gering zu halten und den Montageaufwand sowie die damit verbundenen Herstellungskosten zu minimieren, werden zur Gleitführung der relativ zueinander bewegbaren Teile vorzugsweise Gleitlager verwendet. Dabei ist es wünschenswert, dass die Teile bzw. Teleskoprohre mit einem möglichst geringen Spiel geführt werden. Aufgrund von Fertigungstoleranzen hinsichtlich der Maßhaltigkeit und Geometrie der Teile ist es weiterhin wünschenswert, dass das Spiel einstellbar ist, so dass ein Spielausgleich für die Gleitführung vorgenommen werden kann.

Es ist bekannt, zum Spielausgleich ein keilförmiges Stellelement vorzusehen, das mit einem dazu korrespondierenden ebenfalls keilförmigen Gleitelement derart zusammenwirkt, dass durch Verschieben des Stellelements die Gleitfläche des Gleitelements auf die am anderen Teil vorgesehene Gleitfläche zu bewegbar ist. Ein derartiges Gleitlager mit einer geeigneten Einrichtung zur Verschiebung des Stellelements nimmt jedoch einen relativ großen Raum ein, der zwischen den beiden Teilen vorgesehen oder in zumindest einem der Teile bereitgestellt werden muss.

Insbesondere bei für den Möbelsektor verwendeten Teleskopsäulen soll der Raum zwischen den rohrförmigen Teleskopteilen aus Designgründen sehr klein bemessen sein. Außerdem ist die Stärke der Teleskopteile ebenfalls sehr gering bemessen, so dass Bereiche des Gleitlagers darin nicht untergebracht werden können.

Eine Vorrichtung mit mindestens zwei relativ zueinander bewegbaren Teilen der eingangs genannten Art ist aus der WO 2007/061358 A1 bekannt. Dieses Dokument offenbart ein Gleitlager in Verbindung mit einem teleskopartigen Ausleger, wobei im vorderen Endbereich des inneren Arms des Auslegers ein Lagergehäuse angeordnet ist, das in seinem vorderen und hinteren Bereich jeweils Gleitlager aufweist. Die Gleitlager umfassen ein Gleitelement sowie ein Stellelement, die mit geneigten Anlageflächen an einander anliegen.

Der vorliegenden Erfindung liegt die Aufgabe zugrunde, für eine Vorrichtung der eingangs genannten Art eine Gleitführung bereit zu stellen, die in einem sehr kleinen Zwischenraum zwischen den relativ zueinander bewegbaren Teilen, insweiterhin preiswert in der Herstellung sowie an den Teilen leicht zu montieren ist.

Die Aufgabe wird erfindungsgemäß dadurch gelöst, dass bei einer Vorrichtung der eingangs genannten Art das erste Teil außerhalb seines Bereichs, in dem sich das Stellelement mit der dritten Anlagefläche auf dem ersten Teil abstützt, eine Ausnehmung aufweist, in der ein am Gleitelement angeordneter Vorsprung in Betätigungsrichtung der Verschiebung des Stellelements formschlüssig gelagert ist.

Vorzugsweise ist der Vorsprung in Richtung auf das zweite Teil hin verschiebbar in der Ausnehmung gelagert.

Aufgrund der erfindungsgemäßen Konstruktion ist nicht mehr Raum zwischen den beiden Teilen im Bereich der Gleitführung erforderlich, als er durch das Gleitelement und das mit diesem Zusammenwirkende Stellelement eingenommen wird. In dem Teil, an dem das Gleitlager angeordnet ist, ist lediglich eine Ausnehmung zur Halterung bzw. Führung eines an Gleitelement angeordneten Vorsprungs erforderlich, so dass das Gleitelement bei Verschiebung des Stellelements in dessen Betätigungsrichtung formschlüssig gehalten bzw. zur Gleitfläche des anderen Teils hin bewegbar ist. Die Ausnehmung in dem das Gleitlager aufweisenden Teil kann somit relativ gering gehalten werden. Sie kann als Durchgangsöffnung in dem betreffenden Teil, z. B. rohrförmigen Teleskopteil, ausgebildet sein.

Das Gleitelement ist vorzugsweise in Form einer relativ dünnen Platte ausgebildet, wobei an deren einen größeren Seitenfläche die erste Gleitfläche und an deren gegenüberliegender anderen größeren Seitenfläche der Vorsprung angeordnet sind. Das Stellelement kann ebenfalls plattenförmig ausgebildet sein, wobei seine Dicke vorzugsweise gleich oder kleiner als die Dicke des plattenförmigen Gleitelements bemessen sein kann. Die Höhe des an der von der Gleitfläche wegweisenden Seite des Gleitelements angeordneten Vorsprungs ist vorzugsweise kleiner oder gleich der Tiefe der Ausnehmung. Ist die Ausnehmung als Durchgangsöffnung in dem betreffenden Teil ausgebildet, sollte die Höhe des Vorsprungs maximal der Dicke des betreffenden Teils, an dem das Gleitlager angeordnet ist, entsprechen.

Das Gleitelement ist vorzugsweise aus einem Kunststoff mit hoher Gleitfähigkeit gefertigt.

In einer besonderen Weiterbildung der Erfindung kann das Gleitelement mehrere erste Anlageflächen, die mit ihren zugeordneten Stellelementen zusammenwirken, umfassen. In diesem Falle kann die am Gleitlager vorgesehene erste Gleitfläche relativ groß gestaltet werden, wobei an mehreren Stellen ein Spielausgleich im Bereich der ersten Anlageflächen durch die diesen zugeordneten Stellelemente vorgenommen werden kann. Diese Ausführung erlaubt eine voneinander unabhängige Spieleinstellung an den betreffenden Stellen des Gleitelements, so dass ein möglicherweise unterschiedliches Spiel in verschiedenen Bereichen der aneinander zu führenden Teile ausgeglichen werden kann.

In einer anderen Ausführung kann anstelle mehrerer Stellelemente ein einziges Stellelement mit mehreren zweiten Anlageflächen vorgesehen sein, die jeweils mit einer der betreffenden zweiten Anlagefläche zugeordneten ersten Anlagefläche des Gleitelements zusammenwirken. Diese Lösung hat den Vorteil, dass die Einstellung des Spiels zwischen dem Gleitelement des ersten Teils und dem relativ zu diesem bewegbaren, zweiten Teils besonders leicht durch die Betätigung eines Stellelements vorgenommen werden kann.

Bei diesen Ausführungen ist das Gleitelement vorzugsweise einstückig ausgebildet.

Das Stellelement ist ebenfalls bevorzugt einstückig gefertigt.

Bei einer besonderen Ausführung der Erfindung sind die ersten und zweiten Anlageflächen des Gleitelements bzw. des oder der Stellelemente gegenüber der Längsrichtung der Relativverschiebung der beiden Teile geneigt, so dass das oder die Stellelemente in Längsrichtung der Relativverschiebung der beiden Teile zur Spieleinstellung bewegbar sind.

Bei einer anderen Ausführung der Erfindung sind die ersten und zweiten Anlageflächen gegenüber einer senkrecht zur Längsrichtung der Relativverschiebung der beiden Teile und parallel zu den Gleitflächen angeordneten Ebene geneigt, so dass das Stellelement oder die Stellelemente zur Einstellung des Spiels quer zur Längsrichtung der Relativverschiebung der beiden Teile bewegbar sind. Diese Ausführung hat den Vorteil, dass bei der Relativbewegung der beiden Teile das oder die Stellelemente nicht unbeabsichtigt verschoben werden können.

Bei einer bevorzugten Weiterentwicklung der Erfindung ist das jeweilige Stellelement am oder im Gleitelement in seiner Betätigungsrichtung geführt.

Insbesondere kann das Stellelement am oder im Gleitelement derart geführt sein, dass eine zur Betätigungsrichtung des Stellelements entgegen gesetzte Bewegung durch eine Widerstandskraft gehemmt oder blockiert ist. Aufgrund einer solchen Maßnahme kann das jeweilige Stellelement, nach dem es zur Spieleinstellung verschoben wurde, nur durch Überwindung einer Widerstandskraft oder nicht ohne Beschädigung des Gleitlagers entgegen seiner Betätigungsrichtung zurückbewegt werden. Im letzteren Falle kann vorgesehen sein, dass nach Ausbau des Gleitlagers das betreffende Stellelement aus dem Eingriff mit dem Gleitelement gelöst und nach erneutem Einbau zur Spieleinstellung wieder verwendet werden kann.

In einer bevorzugten Ausführung sind am Gleitelement und Stellelement Rastmittel angeordnet und derart ausgelegt, dass durch das Zusammenwirken der Rastmittel die sich der Zurückbewegung des Stellelements entgegenwirkende Widerstandskraft erzeugt wird.

Gemäß einer anderen Ausführungsform können die Rastmittel durch Widerstandsmittel ersetzt oder ergänzt werden, welche eine Widerstandskraft gegen Lösen als Folge einer reibungsbehafteten Klemmkraft oder als Folge einer stoffschlüssigen Verbindung oder Kombinationen daraus aufweisen. Dabei ist das Stellelement und/oder das Gleitelement und/oder das Gleitlager derart ausgebildet, dass das Stellelement zwar relativ an den korrespondierenden Teilen jedoch daran verschiebbar geführt ist und anschließend oder währenddessen klemmend oder stoffschlüssig festlegbar ausgebildet ist.

In Weiterbildung aller Ausführungsformen ist ein Lösemittel zum Aufheben der Widerstandskraft vorgesehen, welches an dem Stellelement und/oder dem Gleitlager angeformt und/oder daran ansetzbar ausgestaltet ist, wobei das Lösemittel beispielsweise durch ein Hilfswerkzeug betätigbar ausgebildet ist oder aus einem Hilfswerkzeug selbst besteht oder auf anderweitig manuelle Weise betätigbar ausgebildet ist.

Die Rastmittel können aus einer Reihe von in Betätigungsrichtung des Stellelements im Abstand voneinander angeordneten Rastelementen bestehen, so dass ein Rasteingriff zwischen Stellelement und Gleitelement in mehreren Positionen längs des Verschiebeweges des Stellelements erfolgt. Auf diese Weise kann das Spiel zwischen dem Gleitelement und dem relativ zu diesem bewegbaren, zweiten Teil stufenweise eingestellt, insbesondere verringert, werden.

Die Rastelemente können als Zähne ausgebildet sein, die spitze oder abgerundete Formen aufweisen können. Dabei können die Flanken der Zähne so gestaltet sein, dass die bei Bewegung des Stellelements in dessen Betätigungsrichtung kraftaufnehmenden Flanken gegenüber der Betätigungsrichtung in einem von 90° verschiebenden Winkel angeordnet sind, so dass bei Kraftausübung auf das Stellelement die Zähne sich übereinander in eine Raststellung bewegen können. Eine rückwärtige Bewegung des Stellelements entgegen der Betätigungsrichtung kann dadurch gehemmt werden, dass die dabei kraftaufnehmenden Flanken der Zähne in einem steileren Winkel gegenüber der Bewegungsrichtung angeordnet sind. Um eine rückwärtige Bewegung zu blockieren, können die dabei kraftaufnehmenden Flanken im Wesentlichen senkrecht zur Bewegungsrichtung ausgerichtet sein.

In einer vorteilhaften Ausführung können das am Stellelement angeordnete Rastmittel und die zweite Anlagefläche desselben an voneinander abgewandten Seiten des Stellelements ausgebildet sein.

In einer besonderen Ausführung können das Rastmittel und die zweite Anlagefläche des betreffenden Stellelements, in Betätigungsrichtung des Stellelements gesehen, in gegenüberliegenden Bereichen des Stellelements ausgebildet sein. Dabei können das Rastmittel und die zweite Anlagefläche in Betätigungsrichtung des Stellelements zueinander versetzt angeordnet sei.

In einer anderen Ausführung können das am Stellelement angeordnete Rastmittel und die zweite Anlagefläche, in Betätigungsrichtung des Stellelements gesehen, in zueinander seitlich versetzten Bereichen des Stellelements ausgebildet sein. Dabei können das Rastmittel und die zweite Anlagefläche auch in Betätigungsrichtung des Stellelements zueinander versetzt angeordnet sein.

Bei einer seitlich zueinander versetzten Anordnung von Rastmittel und zweiter Anlagefläche kann das Rastmittel an einem sich in Betätigungsrichtung des Stellelements erstreckenden fingerartigen Teil ausgebildet sein, der seitlich separat zu dem Teil des Stellelements angeordnet ist, der die zweite Anlagefläche aufweist. Das fingerartige Teil kann eine geringere Dicke als die übrigen Teilbereiche des Stellelements aufweisen, so dass es mit einer gewünschten Elastizität biegbar ist und die Rastmittel am fingerartigen Teil des Stellelements und die Rastmittel des Gleitelements bei Verschiebung des Stellelements in dessen Betätigungsrichtung elastischer zusammenwirken können.

In einer bevorzugten Weiterbildung der Erfindung ist der am Gleitelement angeordnete Vorsprung derart ausgebildet, dass er das Stellelement im Bereich dessen Rastmittels mit einem Steg übergreift, an dem das Rastmittel des Gleitelements so angeordnet ist, dass es mit dem Rastmittel des Stellelements bei dessen Verschiebung in Betätigungsrichtung zusammenwirken kann.

Vorteilhafterweise kann das Rastmittel des Stellelements, wie schon oben angeführt, eine Reihe von sich in der Betätigungsrichtung des Stellelements im Abstand voneinander angeordneten Rastelementen, insbesondere hintereinander angeordneten Zähnen, aufweisen. Die Reihe der Rastelemente kann in einer Ebene angeordnet sein, die gegenüber der dritten Anlagefläche, mit der das Stellelement am ersten Teil anliegt, in Betätigungsrichtung des Stellelements zu dieser dritten Anlagefläche hin geneigt ist.

Das am Steg des Gleitelements angeordnete Rastmittel besteht vorzugsweise aus einem oder nur wenigen zu den Rastelementen des Stellelements korrespondierenden Rastelementen, deren Anzahl geringer ist als die Anzahl der Rastelemente des Stellelements. In der anfänglichen Betätigungsposition des Stellelements, bei der die erste und zweite Anlagefläche aneinander anliegen, die Gleitfläche des Gleitelements jedoch noch nicht in Richtung auf die Gleitfläche des gegenüberliegenden zweiten Teils hin verschoben ist, kann das am Steg angeordnete Rastmittel in die in Betätigungsrichtung vorn liegenden Rastelemente des Stellelements eingreifen. Das am Steg angeordnete Rastmittel kann in einer anderen Ausführung auch in Betätigungsrichtung des Stellelements vor der Reihe der Rastelemente des Stellelements angeordnet sein. Wird das Stellelement in Betätigungsrichtung verschoben, wandern die hintereinander angeordneten Rastelemente des Stellelements über das am Steg angeordnete Rastmittel, bis die gewünschte Rastposition erreicht ist. Aufgrund der geneigten Anordnung der Rastmittel des Stellelements kann sich der den Steg einschließende Vorsprung des Gleitelements gleichzeitig mit der Gleitfläche des Gleitelements in Richtung auf das zweite Teil hin verschieben. Vorzugsweise ist der Neigungswinkel der Ebene, in der die Rastelemente des Stellelements hintereinander in Betätigungsrichtung angeordnet sind, gleich oder etwas kleiner als der Neigungswinkel der zweiten Anlagefläche gegenüber der dritten Anlagefläche des Stellelements.

Gemäß einer anderen Ausführungsform ist die Reihe der Rastelemente entlang einer Ebene oder Bahn angeordnet, welche parallel zur Oberfläche des ersten Teils verläuft oder welche einem Krümmungsverlauf der Oberfläche des ersten Teils folgt.

Um das Zusammenwirken der Rastmittel noch elastischer zu gestalten, kann am Steg ein zungenartiges Element angeordnet sein, an dem das Rastmittel des Gleitelements ausgebildet ist und das dem Rastmittel des Stellelements gegenüber liegt sowie in der Lage ist, sich von diesem elastisch weg zu bewegen.

Der Steg kann brückenförmig an seinen beiden Endbereichen mit dem Gleitelement verbunden sein und somit eine besonders stabile Anordnung des Rastmittels des Gleitelements über dem Rastmittel des Stellelements gewährleisten. In einer anderen Ausführung kann der Steg nur in einem Endbereich mit dem Gleitelement verbunden sein.

Vorzugsweise erstreckt sich der Steg senkrecht zur Betätigungsrichtung des Stellelements.

Das Gleitelement kann an der Seite des Stegs, die zum Stellelement hin weist, eine Ausnehmung aufweisen, in die das Stellelement einführbar ist. Die Ausnehmung kann so bemessen sein, dass die vom Steg abgewandte Seite des Stellelements bei Einführung des Stellelements in die Ausnehmung im Wesentlichen planparallel zur Gleitfläche des Gleitelements angeordnet ist.

Ein weiterer Vorteil der zuvor genannten Ausführungsbeispiele ist in der besonderen Anordnung der Rastmittel, die an dem zungenartigen Element und/oder an dem Vorsprung bzw. dem Steg vorgesehen sind, zu sehen, da diese Rastmittel in die jeweilige Ausnehmung zumindest teilweise versenkbar angeordnet sind, so dass die Gesamthöhe der Gleitführung entsprechend dem Spalt zwischen dem ersten Teil und dem zweiten Teil sehr gering ausgebildet sein kann. Somit kann aus Designgründen in vorteilhafter Weise ein sehr kleiner Spalt zwischen rohrförmigen Teilen einer Teleskopsäule gewählt werden.

In Betätigungsrichtung des Stellelements kann sich an die Ausnehmung auf der zum Stellelement weisenden Seite des Gleitelements die erste Anlagefläche anschließen, die mit der zweiten Anlagefläche des Stellelements zusammenwirkt. Bevorzugt ist die erste Anlagefläche in Betätigungsrichtung des Stellelements in einem Abstand von dem am Steg bzw. zungenartigen Element ausgebildeten Rastmittel angeordnet. Aufgrund dieses Abstands kann sich die Ausnehmung über den Bereich des Stegs in Betätigungsrichtung des Stellelements hinaus erstrecken. Die zur Gleitfläche planparallele Fläche des Stellelements, die sich an die ihr gegenüber geneigte zweite Anlagefläche anschließt, kann so bemessen sein, dass sie bei vollständiger Einführung des Stellelements in die Ausnehmung mit der Gleitfläche des Gleitelements eine im Wesentlichen geschlossene Fläche bildet.

Bei dem oben beschriebenen alternativen Ausführungsbeispiel, gemäß dem das Rastmittel des Stellelements an einem fingerartigen Teil ausgebildet ist, das sich in einem seitlichen Abstand von dem die zweite Anlagefläche aufweisenden Teil des Stellelements erstreckt, kann das Gleitelement ebenfalls eine Ausnehmung im Bereich des Stegs und vorzugsweise darüber hinaus aufweisen, in die das fingerartige Teil einführbar ist, wobei die der das Rastmittel aufweisenden Seite gegenüberliegende Seite des fingerartigen Teils sowie die außerhalb der zweiten Anlagefläche vorgesehenen übrigen Flächenbereiche des Stellelements im Wesentlichen planparallel zur Gleitfläche des Gleitelements verlaufen.

In einer bevorzugten Weiterbildung der Erfindung weist das Stellelement an der vom Rastmittel abgewandten Seite eine in Betätigungsrichtung zu der das Rastmittel aufweisenden Seite hin geneigt verlaufende erste Auflagefläche auf, die mit einer in Betätigungsrichtung des Stellelements zu der den Vorsprung aufweisenden Seite hin verlaufende zweite Auflagefläche zusammenwirkt, so dass bei Verschiebung des Stellelements in Betätigungsrichtung das Rastmitttel des Stellelements, insbesondere die schon oben beschriebene Reihe von hintereinander angeordneten Rastelementen, in Neigungsrichtung der beiden Auflageflächen geführt wird.

Zwecks Einstellung des Spiels zwischen den relativ zueinander beweglichen Teilen weist das Stellelement vorzugsweise einen Betätigungsbereich auf, der zwischen dem ersten und zweiten Teil angeordnet und von außen her zugänglich ist, derart, dass durch Beaufschlagung des Betätigungsbereichs mit einem geeigneten Werkzeug das Stellelement in Betätigungsrichtung bewegbar und die zweite Anlagefläche längs der ersten verschiebbar ist.

Ist das Stellelement quer verschiebbar bezüglich der Längsrichtung der Relativbewegung der beiden Teile angeordnet, kann es an seinem der Betätigungsrichtung entgegen gerichteten Ende vom Gleitelement in einen Zwischenraum zwischen den beiden Teilen mit seinem Betätigungsbereich vorstehen, wobei dieser von einer Stirnseite der Teile her zugänglich ist, so dass durch Betätigung eines sich stirnseitig in den Zwischenraum erstreckenden und am Betätigungsbereich angreifenden Werkzeugs das Stellelement in seiner Betätigungsrichtung verschiebbar ist.

Der Betätigungsbereich kann eine gegenüber der Bewegungsrichtung der beiden Teile in Betätigungsrichtung des Stellelements geneigte oder konvex gekrümmte Auflauffläche aufweisen, die durch Verschiebung eines in den Zwischenraum zwischen den beiden Teilen anordenbaren und von außerhalb der beiden Teile bedienbaren Werkzeugs beaufschlagbar ist.

Ist das Stellelement nicht in Querrichtung sondern parallel zur Längsrichtung der Relativbewegung der beiden Teile verschiebbar angeordnet, kann eine an dem von der zweiten Auflagefläche wegweisenden Ende des Stellelements angeordnete Stirnseite, die von außerhalb der beiden Teile gegebenenfalls mit einem Werkzeug in Betätigungsrichtung des Stellelements beaufschlagbar ist, als Betätigungsbereich des Stellelements dienen.

Wie schon oben erwähnt, ist die Erfindung insbesondere für eine Teleskopsäule mit mindestens zwei ineinander angeordneten rohrförmigen Teilen ausgelegt, die in Längsrichtung entlang ihrer Gleitflächen relativ zueinander verschiebbar sind. Bei derartigen Teleskopsäulen können das erste und das zweite Teil im Wesentlichen rechteckige Querschnitte und somit im Wesentlichen flache gegenüberliegende Seiten aufweisen.

In einer bevorzugten Ausführung sind an mindestens zwei aneinander angrenzenden Seiten des ersten Teils jeweils zwei in Querrichtung voneinander beabstandete und spiegelbildlich zu der in Längsrichtung verlaufenden senkrechten Mittelebene der betreffenden Seite angeordnete Gleitlager zur Einstellung des Spiels in den betreffenden senkrecht zueinander stehenden Richtungen vorgesehen. In besonderen Fällen kann jedoch auch nur an einer Seite des ersten Teils ein oder mehrere Gleitlager vorgesehen sein.

Insbesondere kann das Gleitlager an dem innen liegenden rohrförmigen Teil angeordnet sein. Vorteilhaft ist hierbei, dass die durch das Gleitlager eventuell erzeugten Schleifspuren im Inneren des außen liegenden rohrförmigen Teils entstehen, so dass dadurch keine optische Beeinträchtigung der Teleskopsäule entsteht.

Bevorzugt ist das Gleitlager in einem Endbereich des ersten rohrförmigen Teils angeordnet. Weiterhin kann es bei zwei ineinander angeordneten rohrförmigen Teilen zweckmäßig sein, sowohl das innere Teil (als erstes Teil, wobei das äußere Teil das zweite Teil bildet) als auch das außen liegende Teil (als erstes Teil, wobei das innen liegende Teil das zweite Teil bildet) in den Endbereichen der sich bei der Relativbewegung überlappenden Teile mit einem oder mehreren Gleitlagern, wie oben beschrieben, zu versehen.

Um die Gleitführung über einen größeren Abschnitt des Gleitelements in Längsrichtung der Relativbewegung der beiden Teile vorzusehen, kann das Gleitelement jedes Gleitlagers zwei in Längsrichtung der Teleskopsäule im Abstand zueinander angeordnete und in Querrichtung zu der betreffenden Seite hin geneigte erste Anlageflächen aufweisen, die jeweils mit einer zweiten Anlagefläche eines in Querrichtung verschiebbaren Stellelements zusammenwirken. Bei dieser Ausführung ist das Gleitelement bevorzugt streifenförmig ausgebildet und in Längsrichtung der Teleskopsäule angeordnet. Insbesondere können die Endbereiche des streifenförmigen Gleitelements in geeigneter Weise, wie oben beschrieben, ausgebildet sein, um die beiden Stellelemente aufzunehmen. Die betreffenden Bereiche und die Stellelemente können im Einzelnen wie oben anhand von Ausführungsbeispielen beschrieben gestaltet sein.

Vorzugsweise sind in beiden seitlichen Randbereichen der betreffenden flachen Seite des ersten rohrförmigen Teils zwei Gleitlager mit jeweils einem streifenförmigen Gleitelement der vorstehend beschriebenen Art gegenüberliegend angeordnet. Zweckmäßigerweise sind die beiden Gleitlager so orientiert, dass sich die Stellelemente, mit jeweils entgegen gesetzten Betätigungsrichtungen, gegenüber liegen.

Bevorzugt sind die Gleitlager spiegelbildlich bezüglich ihrer senkrecht zu ihrer Längsrichtung verlaufenden Mittelebene ausgebildet, so dass identische Gleitlager rechts und links an der betreffenden flachen Seite des rohrförmigen Teils, um 180° verdreht zueinander, verwendet werden können.

Um in einfacher Weise an aneinander angrenzenden Seiten des rohrförmigen Teils über Eck Gleitlager anzuordnen, können zwei Gleitlager der vorstehend beschriebenen Art an ihren den Stellelementen gegenüberliegenden Seiten über Anbindungen miteinander verbunden und im rechten Winkel zueinander angeordnet sein.

Die quer zur Längsrichtung der streifenförmigen Gleitelemente verschiebbaren Stellelemente können wie oben beschrieben vorstehende Betätigungsbereiche mit in Betätigungsrichtung geneigten oder konvex gekrümmten Auflaufflächen aufweisen, so dass sie durch Verschiebung eines in den Innenraum zwischen den beiden rohrförmigen Teilen anordenbaren und von außerhalb der beiden Teile bedienbaren Werkzeugs beaufschlagbar sind. Das Werkzeug weist bevorzugt einen zwischen den in Längsrichtung beabstandeten Stellelementen anordenbaren verbreiterten Bereich auf, wobei die die Verbreiterung bildenden Endbereiche geneigte oder konvex gekrümmte Auflaufflächen aufweisen, die mit den Auflaufflächen an den einander zugewandten Seiten der Betätigungsbereiche der Stellelemente bei Längsverschiebung des Werkzeugs in beiden Richtungen zusammenwirken. Der sich in den Zwischenraum zwischen den beiden rohrförmigen Teilen erstreckende Bereich des Werkzeugs, insbesondere der verbreiterte Bereich, weist dabei eine Dicke auf, die maximal der Dicke des Gleitelements entspricht. Durch Verschiebung des Werkzeugs in Richtung auf das gegenüberliegende Ende des ersten rohrförmigen Teils beaufschlagt die in diese Richtung weisende Auflauffläche des Werkzeugs die Auflauffläche des in dieser Richtung liegenden Stellelements, während bei einer rückwärtigen Verschiebung des Werkzeugs die in die rückwärtige Richtung weisende Auflauffläche des Werkzeugs die Auflauffläche des in rückwärtiger Richtung liegenden Stellelements beaufschlagt. Durch Hin-und Herverschieben des Werkzeugs im Zwischenraum zwischen den beiden Gleitlagern und den sich überlappenden rohrförmigen Teilen kann das Spiel in den beiden beabstandeten Längsabschnitten der Gleitführung, in denen die Stellelemente angeordnet sind, individuell eingestellt werden. Aufgrund einer währenddessen erfolgenden oder nachgeschalteten Relativbewegung der beiden rohrförmigen Teile kann geprüft werden, ob ein optimaler Spielausgleich erreicht wurde oder nicht. Im letzteren Fall wird mit Hilfe des Werkzeugs in dem betreffenden Längsabschnitt das Stellelement bzw. die beiden gegenüberliegenden Stellelemente in Betätigungsrichtung weiter beaufschlagt und dadurch das Spiel zwischen dem Gleitelement und der gegenüberliegenden Gleitfläche des zweiten rohrförmigen Teils verringert.

Bei einer anderen bevorzugten Weiterbildung der Erfindung mit in Längsrichtung der Relativbewegung der beiden Teile verschiebbaren Stellelementen ist vorgesehen, dass mindestens zwei aneinander grenzenden Seiten des ersten Teils mit jeweils einem Gleitlager versehen sind, dessen Gleitelement zwei miteinander verbundene und in Längsrichtung der Teleskopsäule voneinander beabstandete Bereiche aufweist, wobei jeder Bereich in Querrichtung voneinander beabstandete und in Längsrichtung der Teleskopsäule zu der betreffenden Seite hin geneigte erste Anlageflächen aufweist, die mit den zweiten Anlageflächen eines in Längsrichtung der Teleskopsäule verschiebbaren Stellelements zusammenwirken.

Das Stellelement kann hierbei einen mit einem der Bereiche des Gleitelements zusammenwirkenden ersten Bereich, an dessen einer Stirnseite der Betätigungsbereich ausgebildet ist, und einen mit dem anderen Bereich des Gleitelements zusammenwirkenden zweiten Bereich aufweisen, der mit dem ersten Bereich über ein Brückenteil verbunden ist, wobei sich das Brückenteil zwischen den beiden zum ersten Bereich des Stellelements benachbarten ersten Anlageflächen des Gleitelements erstreckt.

In besonderen Fällen kann auch nur an einer der Seiten des ersten Teils ein derartiges Gleitlager vorgesehen sein.

Die Breite eines solchen Gleitlagers kann etwa der Breite der betreffenden Seite entsprechen.

Aufgrund der beiden in Längsrichtung der Teleskopsäule mit Abstand zueinander angeordneten Paare von zusammenwirkenden Anlageflächen zwischen Gleitelement und Stellelement wird eine sich über den betreffenden Längsbereich erstreckende optimale und symmetrische Gleitführung zwischen dem Gleitelement und dem an diesem gleitenden rohrförmigen Teil gewährleistet. Durch Beaufschlagung der als Betätigungsbereich dienenden Stirnseite des Stellelements wird eine gleichzeitige Spieleinstellung im Bereich der mindestens vier zusammenwirkenden Anlageflächen des Gleitelements und des Stellelements erreicht.

Bei einer bevorzugten Weiterbildung der Erfindung ist vorgesehen, dass das Gleitlager zumindest im Fertigungszustand und Einbauzustand vor der Spieleinstellung einstückig ausgebildet ist, wobei das Gleitelement und das Stellelement über Anbindungen miteinander verbunden sind. In dem genannten Zustand sind der erste und zweite Bereich des Stellelements in Längsrichtung der Teleskopsäule von den beiden jeweils mit ihnen zusammenwirkenden Bereichen des Gleitelements beabstandet angeordnet. Die Anordnung ist derart, dass bei Verschiebung des Stellelements in Längsrichtung der Teleskopsäule relativ zum Gleitelement durch Kraftbeaufschlagung des Betätigungsbereichs die Anbindungen reißen oder so gedehnt werden, dass die zweiten Anlageflächen des ersten und zweiten Bereichs des Stellelements auf die ersten Anlageflächen in den beiden Bereichen des Gleitelements aufschiebbar sind.

Diese bevorzugte Ausführung hat den Vorteil, dass beim Einbau des Gleitlagers nur ein Bauteil zu handhaben ist. Das Gleitelement und das Stellelement sind nach ihrer Herstellung unverlierbar miteinander verbunden. Zum Einbau in die Teleskopsäule werden die das Gleitlager aufnehmenden rohrförmigen Teile auseinander bewegt, so dass das Gleitlager an dem betreffenden ersten Teil angeordnet werden kann, wobei die Vorsprünge des Gleitelements in die im ersten rohrförmigen Teil eingebrachten Ausnehmungen eingreifen. Nach dem Einbau wird das zweite rohrförmige Teil über das Gleitelement am ersten rohrförmigen Teil bewegt und in eine Position gebracht, in der der Betätigungsbereich des Stellelements zwischen den beiden Teilen nach außen vorsteht oder gemäß einer anderen Ausführungsform nach innen hinein versetzt steht. Durch Kraftbeaufschlagung des Betätigungsbereichs in Betätigungsrichtung des Stellelements mit einem geeigneten Werkzeug werden die zweiten Anlageflächen auf die diesen gegenüberliegenden ersten Anlageflächen des Gleitelements zu bewegt, wobei die Anbindungen reißen oder entsprechend gedehnt werden, bis der gewünschte Spielausgleich erreicht ist.

Die miteinander zusammenwirkenden Bereiche des Gleitelements und des Stellelements können, wie oben für die in Längsrichtung der Relativbewegung der Teile verschiebbaren Stellelemente beschrieben, ausgebildet sein.

Das Stellelement und das Gleitelement können im Wesentlichen bis auf die Vorsprünge als flache, plattenförmige Bauteile ausgebildet sein, wobei im Fertigungszustand und Einbauzustand vor dem Spielausgleich zumindest die sich gegenüberliegenden, größeren Seitenflächen koplanar angeordnet sind.

In Weiterführung der o. g. Ausführungsformen können das erste Teil und/oder das zweite Teil unterschiedliche Querschnittsformen annehmen und als Rohr und/oder als Stange ausgebildet sein. Dabei kann beispielsweise die zweite Gleitfläche eben, gebogen, gewölbt, gewellt, oder dergleichen ausgebildet sein, wobei sowohl Gleitlager als auch das Stellelement mitsamt den Anlageflächen der Formgebung zumindest der zweiten Gleitfläche angepasst ausgebildet sind. Gemäß einer Ausführungsform kann somit zumindest eines der Teile, also das erste Teil und/oder das zweite Teil, beispielsweise aus einem runden oder ovalförmigen Rohr bestehen, wobei zumindest die erste Gleitfläche der Biegung bzw. der Wölbung der zweiten Gleitfläche korrespondierend entspricht. In vorteilhafter Weise sind die zuvor genannten Gleitlager und Stellelemente sehr dünn ausgebildet, so dass sie entweder durch umformende oder durch urformende Formgebung in einen als Bogen verlaufenden Spalt, welcher sich zwischen einem ersten Teil und einem zweiten Teil der Teleskopsäule erstreckt, angeordnet werden können, wobei wenigstens das erste oder das zweite Teil zumindest abschnittsweise eine bogenförmige oder gekrümmte zweite Gleitfläche aufweist.

Ausführungsbeispiele der Erfindung werden im Folgenden anhand der Zeichnung näher beschrieben.

In der Zeichnung zeigen:
- Fig. 1: Ausschnitt einer Teleskopsäule mit am inneren rohrförmigen Teil angeordneten Gleitlagern,
- Fig. 2: perspektivische Explosionsdarstellung eines in Fig. 1 dargestellten Gleitlagers,
- Fig. 3: perspektivische Ansicht des Gleitlagers mit vollständig in das Gleitelement eingeschobenen Stellelementen,
- Fig. 4: perspektivische Ansicht des in Fig. 3 dargestellten Gleitlagers von unten,
- Fig. 5: perspektivische Explosionsdarstellung des in Fig. 4 gezeigten Gleitlagers,
- Fig. 6: Schnittdarstellung des zwischen dem inneren und äußeren rohrförmigen Teil der Teleskopsäule angeordneten Gleitlagers bei anfänglicher Betätigungsstellung des Stellelements,
- Fig. 7: Schnittdarstellung gemäß Fig. 6 bei endgültiger Betätigungsstellung des Stellelements, in der das Spiel zwischen dem Gleitlager und dem äußeren rohrförmigen Teil ausgeglichen ist,
- Fig. 8: perspektivische Darstellung zweier über Eck miteinander verbundener Gleitlager,
- Fig. 9: aufgebrochene Darstellung eines Abschnitts der Teleskopsäule mit darin eingesetztem Werkzeug bei Betätigung der hinteren Stellelemente,
- Fig. 10: aufgebrochene Darstellung eines Abschnitts der Teleskopsäule mit darin eingesetztem Werkzeug bei Betätigung der vorderen Stellelemente,
- Fig. 11: perspektivische Explosionsdarstellung eines weiteren Ausführungsbeispiels einer Teleskopsäule mit vier Gleitlagern,
- Fig. 12: perspektivische Darstellung eines der in Figur 11 gezeigten Gleitlagers,
- Fig. 13: perspektivische Darstellung des Stellelements des in Fig. 12 gezeigten Gleitlagers,
- Fig. 14: perspektivische Darstellung des Gleitelements des in Fig. 12 gezeigten Gleitlagers,
- Fig. 15: aufgebrochene Darstellung der Teleskopsäule gemäß Fig. 11 mit Blick auf ein Gleitlager im Fertigungszustand,
- Fig. 15a: vergrößerte Darstellung des Bereichs A in Fig. 15,
- Fig. 16: aufgebrochene Darstellung gemäß Fig. 15, wobei die Anbindungen zwischen Stellelement und Gleitelement nach einer ersten Bewegung des Stellelements in Betätigungsrichtung gebrochen sind,
- Fig. 16a: vergrößerte Ansicht des Bereichs B in Fig. 16,
- Fig. 17: aufgebrochene Darstellung gemäß Fig. 15, wobei das Rastmittel des Gleitelements in die vorderen Rastelemente des Stellelements eingreift,
- Fig.17a: vergrößerte Darstellung des Ausschnitts C in Fig. 17,
- Fig. 18: aufgebrochene Darstellung gemäß Fig. 15, wobei das Rastmittel des Gleitelements in die hinteren Rastelemente des Stellelements eingreift, und
- Fig. 18a: vergrößerte Ansicht des Ausschnitts D in Fig. 18.

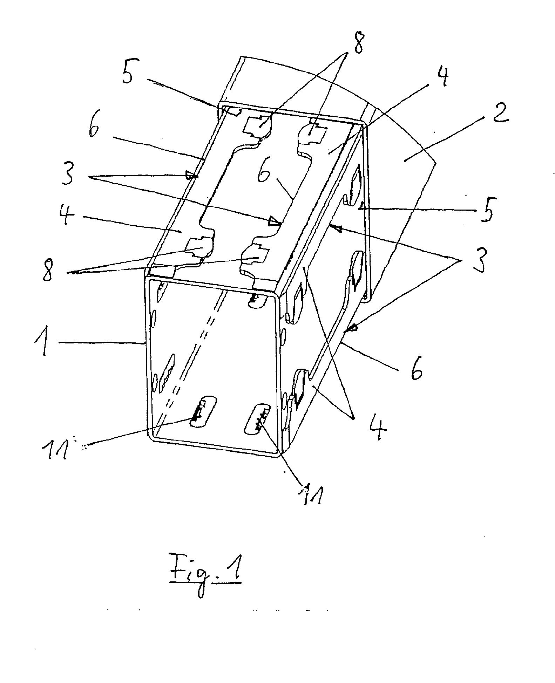

Bei dem in den Figuren 1-10 dargestellten Ausführungsbeispiel handelt es sich um eine Teleskopsäule mit mindestens zwei ineinander angeordneten rohrförmigen Teilen 1 und 2, wobei am innen liegenden, ersten Teil 1 Gleitlager 3 mit jeweils einer ersten Gleitfläche 4 angeordnet sind, die am außen liegenden, zweiten Teil 2 vorgesehenen zweiten Gleitflächen 5 gegenüber liegen.

In wenigstens einem der Teile 1 und 2 kann eine mechanische Antriebseinheit eingesetzt sein, die von Gewindespindeln, Zugmitteln, einer Kombination aus Gewindespindeln und Zugmitteln, diversen Umlenkgetrieben wie Schneckengetrieben, Planetenradgetrieben, Kegelradgetrieben, kegelradähnlichen "Triebstockgetrieben", oder Kombinationen daraus Gebrauch machen kann. Als Antrieb kann ein elektrischer Motor dienen, der in die Teleskopsäule integriert oder als Getriebemotor außen direkt an die Teleskopsäule angesetzt oder im Abstand zur Säule angeordnet sein kann.

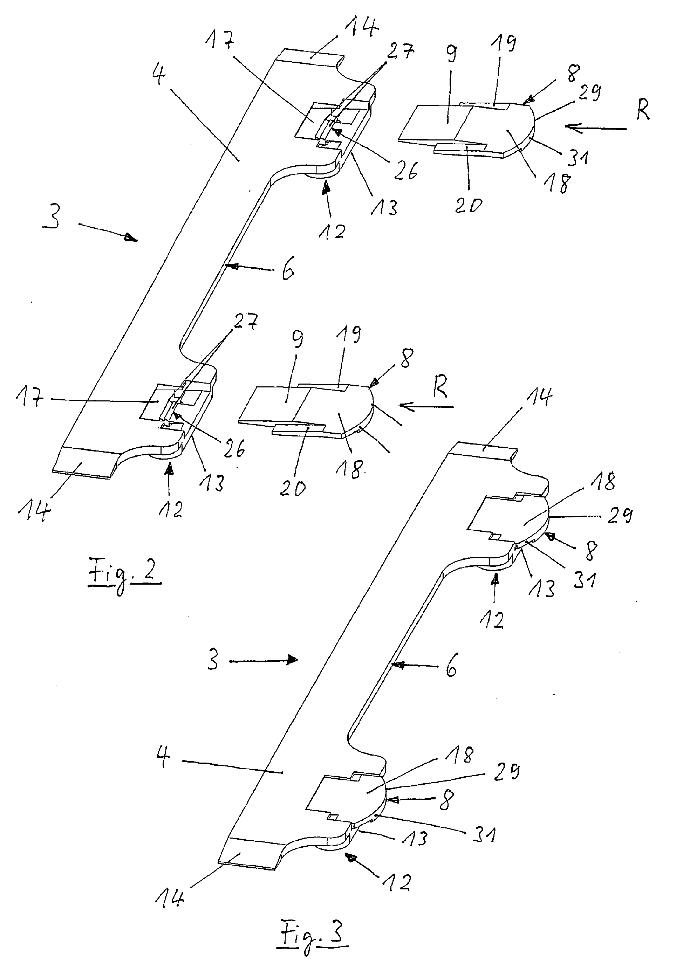

Wie insbesondere aus den Figuren 2-5 hervorgeht, umfasst jedes Gleitlager 3 ein Gleitelement 6, an dem die erste Gleitfläche 4 ausgebildet ist und an dessen von der ersten Gleitfläche 4 weg weisenden Seite zwei im Abstand voneinander angeordnete erste Anlageflächen 7 vorgesehen sind.

Jedes Gleitlager 3 schließt weiterhin zwei Stellelemente 8 ein, die jeweils mit einer zweiten Anlagefläche 9 in einer Betätigungsrichtung R verschiebbar an der zugeordneten ersten Anlagefläche 7 zur Anlage gebracht werden können. Dabei stützen sie sich mit einer von der jeweiligen zweiten Anlagefläche 9 weg weisenden dritten Anlagefläche 10 auf dem ersten rohrförmigen Teil 1 ab, so dass durch weitere Verschiebung des Stellelements 8 in seiner Betätigungsrichtung R das Gleitelement 6 mit der ersten Gleitfläche 4 auf die zweite Gleitfläche 5 des zweiten Teils 2 zu bewegbar ist.

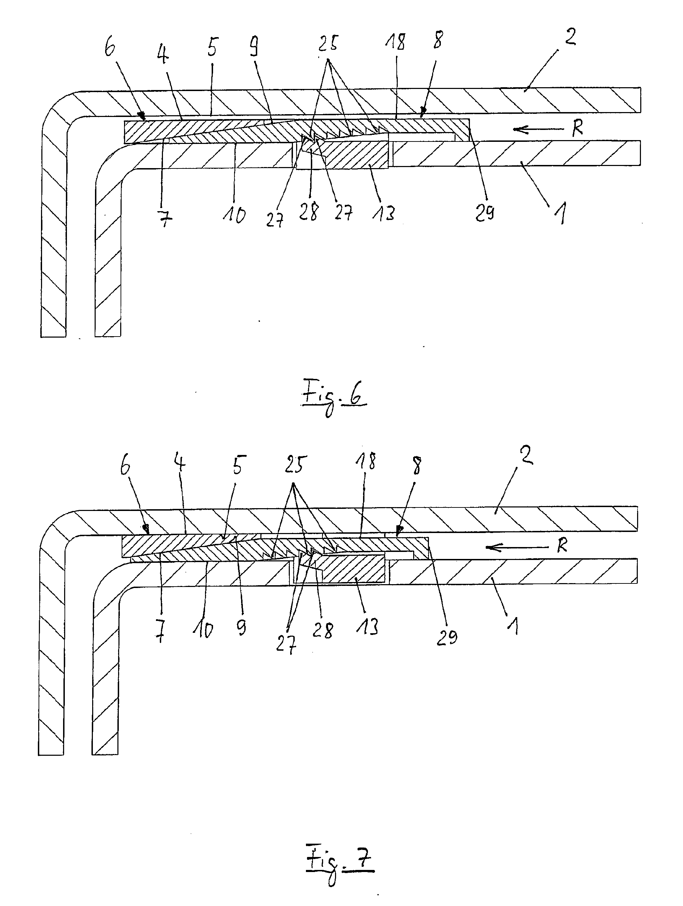

Wie in Figur 1 gezeigt ist, weist das erste Teil 1 außerhalb seines Bereichs, in dem sich das jeweilige Stellelement 8 mit seiner dritten Anlagefläche 11 abstützt, eine Ausnehmung 11 auf, in der ein am Gleitelement 6 angeordneter Vorsprung 12 in Betätigungsrichtung R der Verschiebung des Stellelements 8 formschlüssig gelagert ist. Wie im Folgenden noch näher anhand der Figuren 6 und 7 erläutert wird, ist der Vorsprung 12 in Richtung auf das außen liegende, zweite rohrförmige Teil 2 hin verschiebbar in der Ausnehmung 11 gelagert.

Die Gleitelemente sind aus einem Kunststoff mit hoher Gleitfähigkeit gefertigt und als relativ dünne Platten ausgebildet, wobei an deren einer größeren Seitenfläche die erste Gleitfläche 4 und an deren gegenüberliegender anderen größeren Seitenfläche jeweils zwei Vorsprünge 12 angeordnet sind. Die Stellelemente sind ebenfalls als relativ dünne Platten ausgebildet, deren Dicke in etwa der Dicke der plattenförmigen Bereiche des Gleitelements entspricht. Die Höhe des an der von der Gleitfläche 4 weg weisenden Seite des Gleitelements 6 angeordneten Vorsprünge 12 entspricht etwa der Tiefe der Ausnehmungen 11 an der Außenseite des innen liegenden, ersten Teils 2. Die Ausnehmungen 11 sind als Durchgangsöffnungen in Form von sich in Längsrichtung der Teleskopsäule erstreckenden Langlöchern in im zweiten Teil 2 ausgebildet.

An ihren in Bewegungsrichtung der beiden Teile 1 und 2 liegenden Enden weisen die Gleitelemente Aufgleitschrägen 14 zum ungehinderten Aufgleiten des Teils 2 auf das am Teil 1 angeordnete Gleitlager 3 auf.

Bei dem in den Figuren 1 - 10 gezeigten ersten Ausführungsbeispiel sind die ersten Anlageflächen 7 und die zweiten Anlageflächen 9 gegenüber einer senkrecht zur Längsrichtung der Relativverschiebung der beiden Teile 1 und 2 und parallel zu den Gleitflächen 4 und 6 angeordneten Ebene geneigt, so dass die Stellelemente 8 zur Einstellung eines Spiels zwischen den beiden Gleitflächen 4 und 5 quer zur Längsrichtung der Teleskopsäule bewegbar sind.

Wie insbesondere aus den Figuren 2 bis 5 hervorgeht, sind die Stellelemente 8 an dem Gleitelement 6 in ihrer Betätigungsrichtung geführt. Die am Gleitelement 6 angeordneten Vorsprünge 12 sind derart ausgebildet, dass sie jeweils das Stellelement 8 mit einem Steg 13 übergreifen. Die Stege 13 sind brückenförmig an ihren beiden Endbereichen 14 und 15 mit dem Gleitelement 6 verbunden. Die Stege 13 erstrecken sich senkrecht zur Betätigungsrichtung der Stellelemente 8.

Weiterhin weist das Gleitelement 6 an der Seite der Stege 14, die zu dem jeweiligen Stellelement 8 hin weist, eine Ausnehmung 17 auf, in die das jeweilige Stellelement 8 einführbar ist. Die Ausnehmung 17 ist so bemessen, dass die vom Steg 13 abgewandte Fläche 18 des Stellelements 8 bei Einführung des Stellelements 8 in die Ausnehmung 17 vor einer Krafteinwirkung auf die betreffende erste Anlagefläche 7 des Gleitelements 6 planparallel zur Gleitfläche 4 des Gleitelements 6 angeordnet ist. Somit ist die Höhe des Gleitlagers 3 im Zwischenraum zwischen dem innen liegenden, ersten Teil 1 und dem außen liegenden, zweiten Teil 2 der Teleskopsäule äußerst gering bemessen. Sie kann zwischen 1 mm und 2 mm liegen, während der Abstand der beiden Teile 1 und 2 im Bereich des Gleitlagers 3 etwas größer bemessen ist. Zum Beispiel können die Höhe des Gleitlagers 3 1,3 mm und der Abstand der beiden Teile 1 und 2 1,5 mm betragen.

In Betätigungsrichtung des Stellelements 8 schließt sich die jeweilige erste Anlagefläche 7 an die Ausnehmung 17 auf der zum Stellelement 8 weisenden Seite des Gleitelements 6 an. Wie insbesondere aus den Figuren 6 und 7 hervorgeht, ist die erste Anlagefläche 7 in Betätigungsrichtung 10 des Stellelements 8 in einem Abstand vom Steg 13 angeordnet. Aufgrund dieses Abstands erstreckt sich die Ausnehmung 17 über den Bereich des Stegs 13 in Betätigungsrichtung 10 des Stellelements 8 hinaus. Die zur Gleitfläche 4 des Gleitelements 6 planparallele Fläche 18 des Stellelements 8, die sich an die ihr gegenüber geneigte zweite Anlagefläche 9 anschließt, ist so bemessen, dass sie bei vollständiger Einführung des Stellelements 8 in die Ausnehmung 17 mit der Gleitfläche 4 des Gleitelements 6 eine im Wesentlichen geschlossene Fläche bildet.

Wie insbesondere aus den Figuren 2-5 hervorgeht, weisen die Stellelemente 8 an ihren beiden Seiten in Betätigungsrichtung zum jeweiligen Steg 13 hin geneigt verlaufende erste Auflageflächen 19 und 20 auf, die mit zweiten Auflageflächen 21 und 22 zusammenwirken, die in Betätigungsrichtung des Stellelements 8 zu der den Steg 13 aufweisenden Seite des Gleitelements 6 hin geneigt verlaufen. Bei Verschiebung des Stellelements 8 in der Betätigungsrichtung R wird somit insbesondere dessen von der zweiten Anlagefläche 9 und der Fläche 18 abgewandte Seite 23 parallel zur Gleitfläche 4 des Gleitelements 6 geführt.

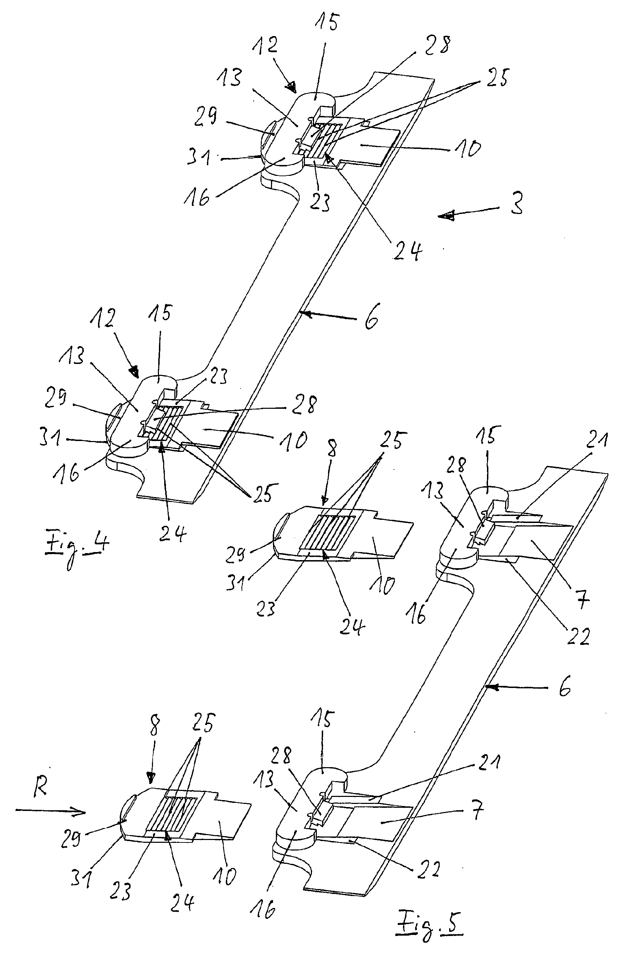

Wie die Figuren 4 bis 7 zeigen, ist an der Seite 23 der Stellelemente 8 ein Rastmittel 24 ausgebildet, das aus einer Reihe von in Betätigungsrichtung des Stellelements 8 im Abstand voneinander angeordneten, sich quer zur Betätigungsrichtung erstreckenden Zähnen 25 besteht. Das am Stellelement 8 angeordnete Rastmittel 24 wirkt mit einem an der zur Ausnehmung 17 weisenden Seite des Stegs 14 angeordneten Rastmittel 26 zusammen. Das Rastmittel 26 besteht, wie in den Figuren 2, 6 und 7 gezeigt, aus zwei Zähnen 27.

Wie ebenfalls aus den Figuren 6 und 7 hervorgeht, ist die Reihe der Zähne 25 des am Stellelement 8 angeordneten Rastmittels 24 in einer Ebene angeordnet, die gegenüber der dritten Anlagefläche 11, mit der sich das Stellelement 8 am ersten Teil 1 abstützt, in Betätigungsrichtung R zur dritten Anlagefläche 10 hin geneigt. In der in Figur 6 dargestellten anfänglichen Betätigungsposition des Stellelements 8, bei der die zweite Anlagefläche 9 an der ersten Anlagefläche 7 des Gleitelements anliegt, ohne auf diese eine wirksame Kraft zu übertragen, greift das am Steg 13 angeordnete Rastmittel 26 in die in Betätigungsrichtung R vorn liegenden Zähne 25 des Stellelements 8 ein. Wird das Stellelement 8 in Betätigungsrichtung R verschoben, wandern die hintereinander angeordneten Zähne 25 des Stellelements 8 über das am Steg 13 angeordnete Rastmittel 26 bis in eine in Figur 7 dargestellte Rastposition, bei der das ursprünglich zwischen der Gleitfläche 4 des Gleitelements 6 und dem außen liegenden, zweiten rohrförmigen Teil 2 der Teleskopsäule vorhandene Spiel ausgeglichen ist. Aufgrund der geneigten Anordnung der Zähne 25 des Stellelements 8 kann sich der den Steg 13 einschließende Vorsprung 12 des Gleitelements 6 gleichzeitig mit der Gleitfläche 4 des Gleitelements 6 in Richtung auf das außen liegende, zweite rohrförmige Teil 2 hin verschieben. Der Neigungswinkel der Ebene, in der die Zähne 25 des Stellelements 8 hintereinander in Betätigungsrichtung R angeordnet sind, ist etwas kleiner als der Neigungswinkel der zweiten Anlagefläche 9 gegenüber der dritten Anlagefläche 10 des Stellelements 8.

Um das Zusammenwirken der Rastmittel 24 und 26 noch elastischer zu gestalten, ist am Steg 13 ein zungenartiges Element 28 angeordnet, an dem das Rastmittel 26 des Gleitelements 6 ausgebildet ist und das sich vom Rastmittel 24 des Stellelements 8 elastisch weg bewegen kann.

In nicht näher dargestellter Weise und gemäß einer anderen Ausführungsform kann der Steg 13 die Rastmittel 24 und 26 aufweisen.

Zwecks Einstellung des Spiels zwischen dem Gleitlager 3 und dem außen liegenden, zweiten rohrförmigen Teil 2 weist das Stellelement 8 einen Betätigungsbereich 29 auf, der zwischen den beiden rohrförmigen Teilen 1 und 2 angeordnet und von außen her derart zugänglich ist, dass durch Beaufschlagung des Betätigungsbereichs 29 mit einem geeigneten Werkzeug 30 das Stellelement 8 in Betätigungsrichtung R bewegbar und die zweite Anlagefläche 9 längs der ersten Anlagefläche 7 verschiebbar ist. Der Betätigungsbereich 29 steht, wie insbesondere in den Figuren 3 und 4 gezeigt ist, an dem der Betätigungsrichtung R entgegen gerichteten Ende des Stellelements 8 vom Gleitelement 6 im Zwischenraum zwischen den beiden Teilen 1 und 2 vor, so dass er von der Stirnseite des innen liegenden, ersten Teils 1 her zugänglich ist. Durch Betätigung eines sich stirnseitig in den Zwischenraum erstreckenden und am Betätigungsbereich 29 angreifenden Werkzeugs 30 ist das Stellelement 8 in seiner Betätigungsrichtung R verschiebbar.

Wie aus den Figuren 2 bis 5 hervorgeht, weist der Betätigungsbereich 29 eine leicht konvex gekrümmte Auflauffläche 31 auf, die durch Verschiebung eines in den Zwischenraum zwischen den beiden Teilen 1 und 2 anordenbaren und von außerhalb der beiden Teile 1 und 2 bedienbaren Werkzeugs 30 beaufschlagbar ist.

Wie die Figuren 1, 6 und 7 zeigen, weisen das innen liegende, erste rohrförmige Teil 1 und das außen liegende, zweite rohrförmige Teil 2 der Teleskopsäule im Wesentlichen rechteckige Querschnitte und somit im Wesentlichen flache gegenüberliegende Seiten auf. An mindestens zwei aneinander angrenzenden Seiten des innen liegenden, ersten Teils 1 sind jeweils zwei in Querrichtung voneinander beabstandete und spiegelbildlich zu der in Längsrichtung verlaufenden senkrechten Mittelebene der betreffenden Seite angeordnete Gleitlager 3 zur Einstellung des Spiels in senkrecht zu den betreffenden Seiten stehenden Richtungen angeordnet. Wie insbesondere aus Figur 1 hervorgeht, sind die Gleitlager 3 in einem Endbereich des innen liegenden, ersten rohrförmigen Teils 1 so angeordnet, dass sich jeweils in den beiden seitlichen Randbereichen der betreffenden flachen Seite die beiden Gleitlager 3 gegenüber liegen. Die Gleitlager 3 sind spiegelbildlich bezüglich ihrer senkrecht zu ihrer Längsrichtung verlaufenden Mittelebene ausgebildet, so dass identische Gleitlager 3 rechts und links an der betreffenden flachen Seite des innen liegenden, ersten rohrförmigen Teils, um 180° verdreht zueinander, verwendet werden können.

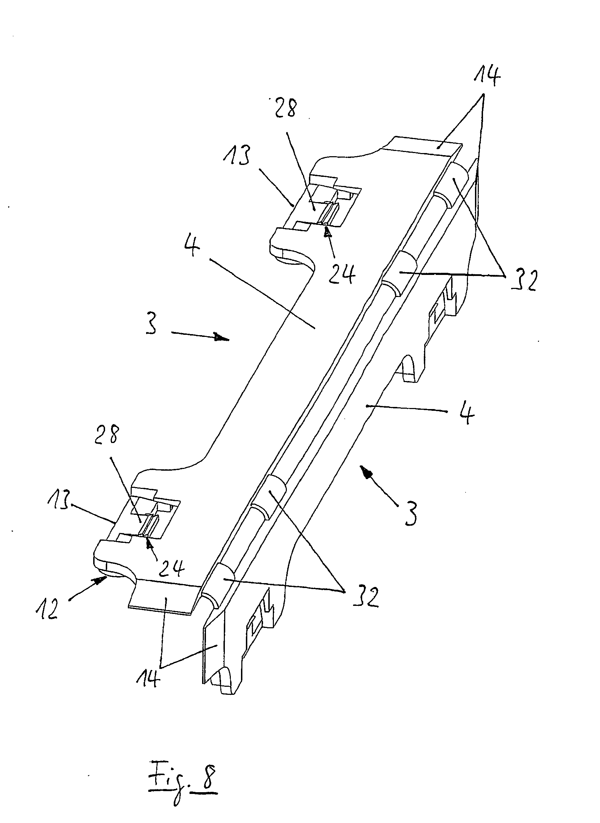

Um in einfacher Weise an aneinander angrenzenden Seiten des innen liegenden, ersten rohrförmigen Teils Gleitlager 3 über Eck anzuordnen, können zwei Gleitlager 3 an ihren den Stellelementen 8 gegenüber liegenden Seiten über Anbindungen 32 miteinander verbunden und im rechten Winkel zueinander angeordnet sein, wie dies in Figur 8 gezeigt ist.

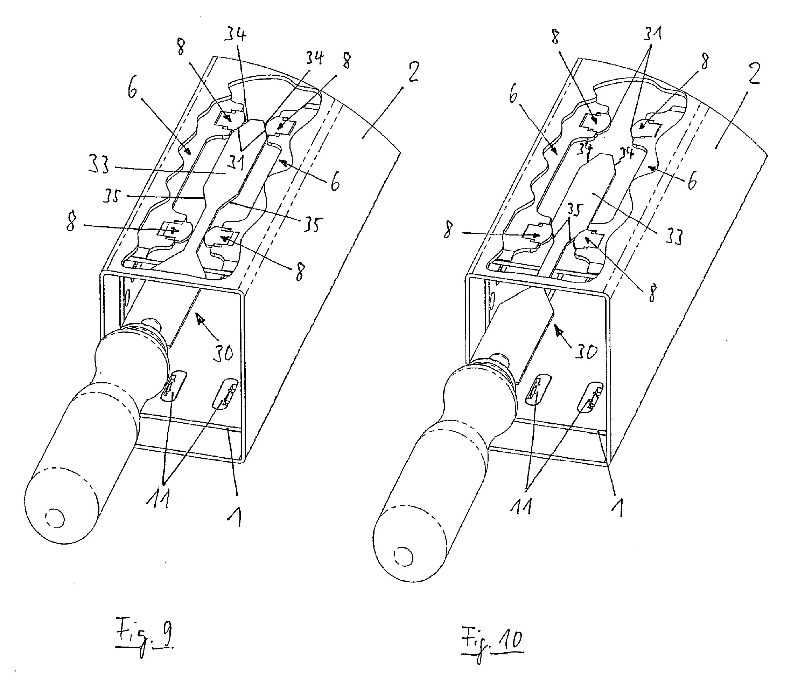

Wie aus den Figuren 9 und 10 hervorgeht, weist das Werkzeug 30 zur Betätigung der Stellelemente 8 einen zwischen den in Längsrichtung beabstandeten Stellelementen 8 anordenbaren verbreiterten Bereich 33 auf, wobei die die Verbreiterung bildenden Endbereiche geneigte Auflaufflächen 34 und 35 aufweisen, die mit den Auflaufflächen 31 an den einander zugewandten Seiten der Betätigungsbereiche 29 der Stellelemente 8 bei Längsverschiebung des Werkzeugs 30 in beiden Richtungen zusammenwirken. Der sich in den Zwischenraum zwischen den beiden rohrförmigen Teilen 1 und 2 erstreckende Bereich des Werkzeugs 30, insbesondere der verbreiterte Bereich 33, weist dabei eine Dicke auf, die etwa der Dicke der Gleitelemente 6 und Stellelemente 8 entspricht. Durch Verschiebung des Werkzeugs 30 in Richtung auf das gegenüber liegende Ende des innen liegende, ersten rohrförmigen Teils 1 beaufschlagen die in dieser Richtung weisenden Auflaufflächen 34 des Werkzeugs 30 die Auflaufflächen 31 der in dieser Richtung liegenden Stellelemente 8. Bei rückwärtiger Verschiebung des Werkzeugs 30 können die in die rückwärtige Richtung weisenden Auflaufflächen 35 des Werkzeugs 30 die Auflaufflächen 31 der in dieser Richtung liegenden Stellelemente 8 beaufschlagen.

Zum Einlegen des Werkzeugs 30 in den Zwischenraum zwischen den Stellelementen 8 wird das außen liegende, zweite rohrförmige Teil 2 der Teleskopsäule über die am ersten Teil 1 angeordneten Gleitlager 3 hinweg so weit verschoben, dass diese, wie in Figur 1 gezeigt, freiliegen. Das Werkzeug 30 kann dann zwischen die an einer Seite des ersten Teils 1 angeordneten Gleitlager 3 von außen eingesetzt werden. Danach wird das außen liegende, zweite Teil 2 über die Gleitlager 3 in eine Position, wie sie in den Figuren 9 und 10 gezeigt ist, verschoben, so dass das zweite Teil 2 die Gleitlager überlappt. Durch Hin- und Herverschieben des Werkzeugs 30 im Zwischenraum zwischen den beiden Gleitlagern 3 und den sich überlappenden Teilen 1 und 2 kann das Spiel zwischen den die Stellelemente 8 aufweisenden, beabstandeten Längsabschnitten der Gleitelemente 6 und den gegenüber liegenden Gleitflächen 5 des außen liegenden, zweiten Teils 2 individuell eingestellt werden. Aufgrund einer währenddessen erfolgenden oder nachgeschalteten Relativbewegung der beiden Teile 1 und 2 kann geprüft werden, ob ein optimaler Spielausgleich erreicht wurde oder nicht. Im zuletzt genannten Fall werden mit Hilfe des Werkzeugs 30 die beiden gegenüber liegenden Stellelemente 8 in dem betreffenden Längsabschnitt der Gleitlager 3 in Betätigungsrichtung weiter beaufschlagt und dadurch das Spiel zwischen dem Gleitelement 6 und der gegenüber liegenden Gleitfläche 5 des außen liegenden, zweiten Teils 2 verringert.

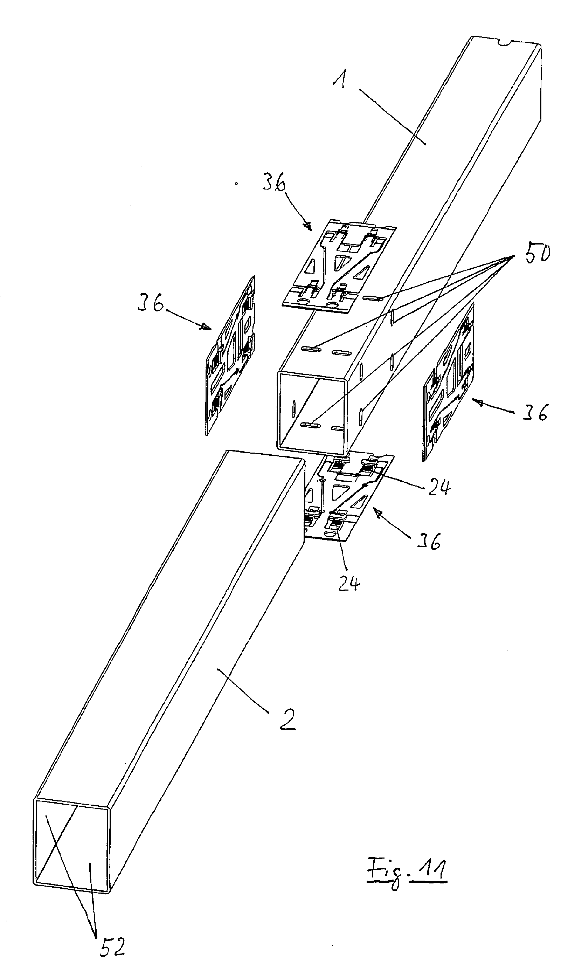

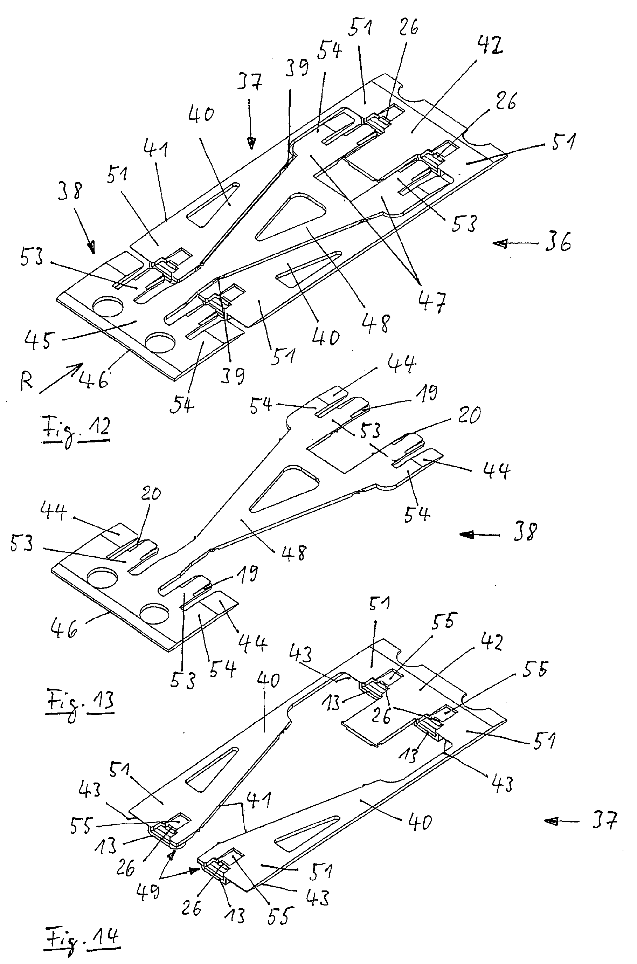

Bei dem in den Figuren 11 bis 18a gezeigten Ausführungsbeispiel sind, wie insbesondere aus Figur 11 hervorgeht, vier Gleitlager 36 an den Außenseiten des innen liegenden, ersten Teils 1 einer Teleskopsäule angeordnet. Wie genauer in den Figuren 12 - 14 gezeigt ist, besteht jedes Gleitlager 36 aus einem zusammenhängenden Gleitelement 37 und einem mit diesem zusammenwirkenden, zusammenhängenden Stellelement 38. Das Gleitelement 37 und das Stellelement 38 sind in dem in den Figuren 11 und 12 gezeigten Fertigungszustand und Einbauzustand des Gleitlagers 36 vor der Spieleinstellung einstückig über Anbindungen 39 miteinander verbunden.

Das Gleitelement 37 weist zwei über seitliche Stege 40 miteinander verbundene und in Längsrichtung der Teleskopsäule voneinander beabstandete Bereiche 41 und 42 auf, wobei jeder Bereich 41, 42 quer zur Längsrichtung der Teleskopsäule voneinander beabstandete und in Längsrichtung der Teleskopsäule zu der betreffenden Seite des ersten Teils 1 hin geneigte erste Anlageflächen 43 aufweist. Die ersten Anlageflächen 43 des Gleitelements 37 wirken mit zweiten Anlageflächen 44 des in Längsrichtung der Teleskopsäule verschiebbaren Stellelements 38 zusammen.

Das Stellelement 38 weist hierzu einen mit dem Bereich 41 zusammenwirkenden ersten Bereich 45, an dessen einer Stirnseite ein Betätigungsbereich 46 für das Stellelement 38 ausgebildet ist, und einen mit dem anderen Bereich 42 des Gleitelements 37 zusammenwirkenden zweiten Bereich 47 auf, der mit dem ersten Bereich 45 über ein Brückenteil 48 verbunden ist. Das Brückenteil 48 erstreckt sich zwischen den beiden die Bereiche 41 und 42 des Gleitelements 37 verbindenden seitlichen Stegen 40.

In dem in den Figuren 11 und 12 gezeigten Fertigungszustand und Einbauzustand des Gleitlagers 36 vor der Spieleinstellung sind der erste und zweite Bereich 45, 47 des Stellelements 38 in Längsrichtung der Teleskopsäule von den beiden jeweils mit ihnen zusammenwirkenden Bereichen 41 bzw. 42 des Gleitelements 37 beabstandet angeordnet. Die Anordnung ist derart, dass bei Verschiebung des Stellelements 38 in Längsrichtung der Teleskopsäule relativ zum Gleitelement 37 die Anbindungen 39 zwischen dem Brückenteil 48 und den Stegen 40 reißen, so dass die zweiten Anlageflächen 44 des ersten und zweiten Bereichs 45, 47 des Stellelements 38 auf die ersten Anlageflächen 43 in den beiden Bereichen 41, 42 des Gleitelements 37 aufschiebbar sind.

Die Gleitelemente 37 und Stellelemente 38 sind aus einem Kunststoff mit hoher Gleitfähigkeit gefertigt und als relativ dünne Platten ausgebildet, die in einem schmalen Spalt zwischen dem innen liegenden, ersten rohrförmigen Teil 1 und dem außen liegenden, zweiten rohrförmigen Teil 2 der Teleskopsäule angeordnet werden können. Die gegenüber liegenden größeren Seitenflächen eines Gleitelements 37 und des damit im Fertigungs- und Einbauzustand über die Anbindungen 39 verbundenen Stellelements 38 sind jeweils koplanar zueinander angeordnet. Die Gleitlager 36 haben die Form einer im Wesentlichen rechteckigen Platte, deren sich in Längsrichtung der Teleskopsäule erstreckenden gegenüber liegenden schmalen Seitenflächen eine größere Länge aufweisen als die in Querrichtung gegenüber liegenden schmalen Seitenflächen. Die Länge der zuletzt genannten schmalen Seitenflächen entspricht etwa der Breite der dem jeweiligen Gleitlager 36 zugeordneten Seite des innen liegenden, ersten Teils 1. Die Gleitlager 36 sind in einem Endabschnitt des ersten Teils 1, der über den gesamten Weg der Relativbewegung der beiden Teile 1 und 2 zueinander vom zweiten Teil 2 überlappt wird, angeordnet.

Die Gleitelemente 37 weisen an ihrer zum ersten Teil 1 hin weisenden Seite jeweils vier Vorsprünge 49 auf, die in Ausnehmungen 50 an der betreffenden Seite des ersten Teils 1 in Betätigungsrichtung R der Verschiebung des Stellelements 38, d.h. in Längsrichtung der Teleskopsäule, formschlüssig gelagert sind. Die Vorsprünge 49 sind, wie bei den vorstehend beschriebenen ersten Ausführungsbeispiel, in Richtung auf das außen liegende, zweite rohrförmige Teil 2 hin verschiebbar in den Ausnehmungen 50 gelagert. Sie können sich somit, wie beim ersten Ausführungsbeispiel, zusammen mit der ersten Gleitfläche 51 des Gleitelements 37 bei Betätigung des Stellelements 38 zur am außen liegenden, zweiten Teil 2 gegenüber liegenden zweiten Gleitfläche 52 hin bewegen, ohne dass es zu Verspannungen im Gleitelement 37 kommt.

Wie beim vorstehend beschriebenen ersten Ausführungsbeispiel sind am Gleitelement 37 und Stellelement 38 zusammenwirkende Rastmittel 24 und 26 vorgesehen, die eine stufenweise Spieleinstellung erlauben und eine Zurückbewegung des Stellelements 38 entgegen seiner Betätigungsrichtung R verhindern. Die Rastmittel 24 und 26 sind wie diejenigen des ersten Ausführungsbeispiels in Form von Zähnen 25 und 27 ausgebildet.

Die Rastmittel 26 des Gleitelements 37 sind jeweils an einem Steg 13, der einen Vorsprung 49 bildet, den Rastmitteln 24 des Stellelements 38 gegenüberliegend, angeordnet. Im Einzelnen wird auf die betreffende Beschreibung des ersten Ausführungsbeispiels hingewiesen.

Im Unterschied zum ersten Ausführungsbeispiel ist das Rastmittel 24 des Stellelements 38 an einem fingerartigen Teil 53 des Stellelements 38 ausgebildet, das sich in einem seitlichen Abstand von einem die zugehörige zweite Anlagefläche 44 aufweisenden Teil 54 des Stellelements 38 erstreckt. Zur Führung der fingerartigen Teile 53 im Gleitelement 37 sind Ausnehmungen 55 im Bereich der Stege 13 und in Betätigungsrichtung R des Stellelements 38 darüber hinaus vorgesehen. An der von den Rastmitteln 24 abgewandten Seite des Stellelements 38 darüber sind jeweils zur Seite des Rastmittels 24 hin geneigt verlaufende erste Auflageflächen 19, 20 vorgesehen, die mit zum jeweiligen Steg 13 hin geneigt verlaufenden zweiten Auflageflächen 21, 22 zusammenwirken, so dass bei Verschiebung des Stellelements 38 in Betätigungsrichtung die Rastmittel 24 in der Neigungsrichtung der Auflageflächen geführt werden.

Zweckmäßiger Weise sind die jeweils die zweite Anlagefläche 44 aufweisenden Teile 54 des Stellelements 38 außerhalb der fingerartigen Teile 53 angeordnet. Dadurch wird bei Verschiebung des Stellelements 38 in Betätigungsrichtung R das Gleitelement 37 an seitlich außen liegenden und in Längsrichtung beabstandeten Bereichen zum zweiten Teil 2 hin mit Kraft beaufschlagt.

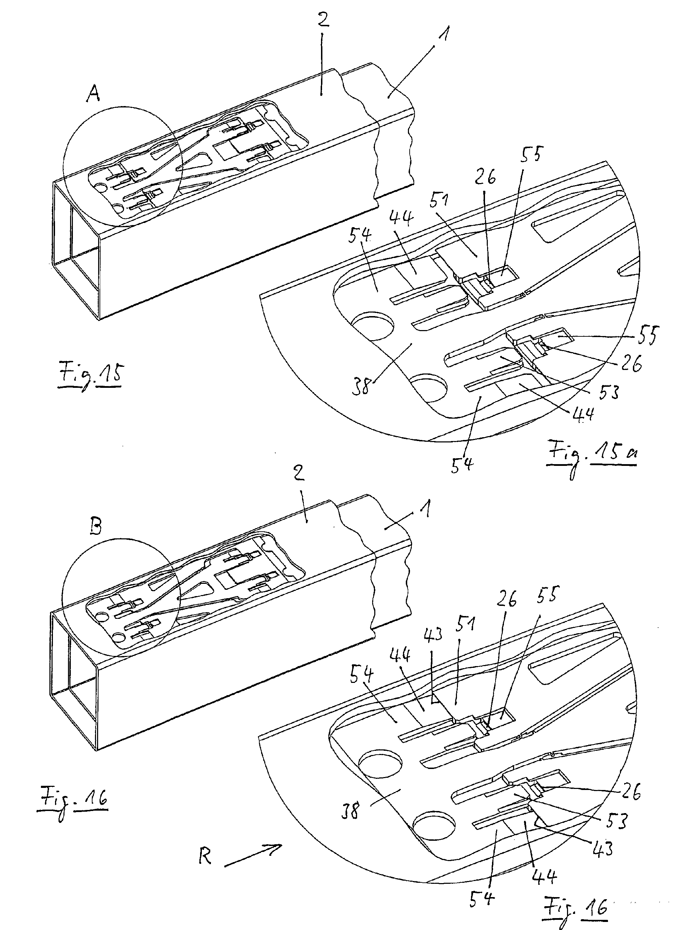

Zum Einbau in die Teleskopsäule werden die die Gleitlager 36 aufnehmenden rohrförmigen Teile 1 und 2 auseinander bewegt, so dass die Gleitlager 36, wie oben schon beschrieben, an einem Endabschnitt des innen liegenden, ersten Teils 1 angeordnet werden können, wobei die Vorsprünge 49 der Gleitelemente 37 in die im ersten Teil 1 eingebrachten Ausnehmungen 50 eingreifen. Nach dem Einbau wird das zweite rohrförmige Teil 2 relativ zum ersten rohrförmigen Teil 1 über die Gleitlager 36 bewegt, wie dies z.B. in den Figuren 15 und 15a gezeigt ist. Das Gleitelement 37 und das Stellelement 38 sind nach wie vor über die Anbindungen 39 miteinander verbunden.

Durch Kraftbeaufschlagung der als Betätigungsbereich 46 dienenden Stirnseite des Stellelements 38 durch ein stirnseitig in den Zwischenraum zwischen den beiden Teilen 1 und 2 eingeführtes, geeignetes Werkzeug werden die zweiten Anlageflächen 44 des Stellelements 38 auf die ersten Anlageflächen 43 des Gleitelements 37 zu bewegt, wobei die Anbindungen 39 reißen. Diese Position des Stellelements 38 relativ zum Gleitelement 37 ist in den Figuren 16 und 16a dargestellt.

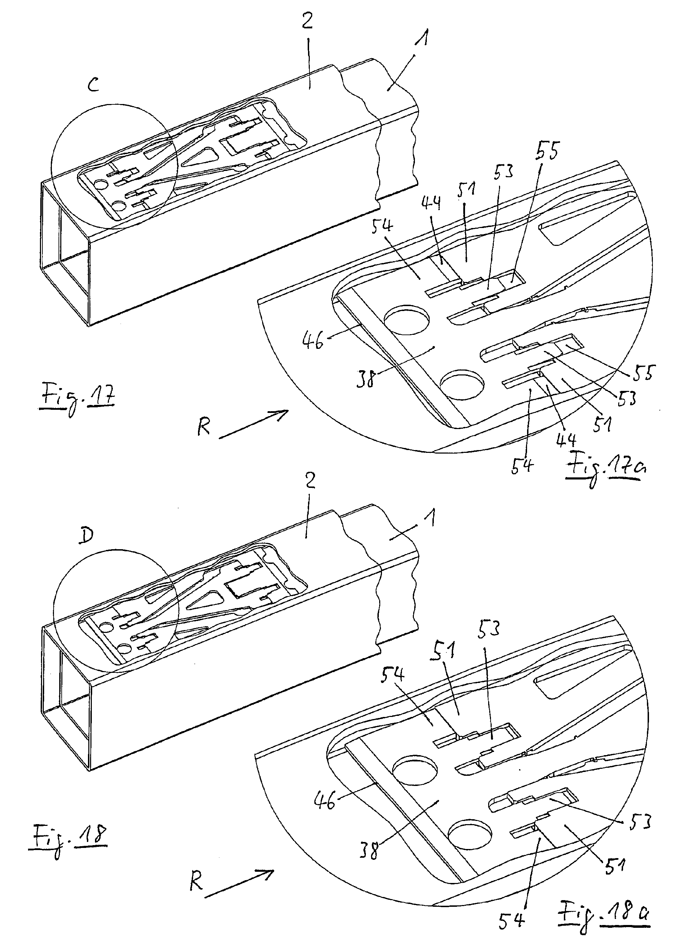

Bei Weiterbewegung des Stellelements 38 durch das Werkzeug in Betätigungsrichtung R wird gleichzeitig eine erste Rastposition der am Stellelement 38 angeordneten Rastmittel 24 und der am Gleitelement 37 vorgesehenen Rastmittel 26 erreicht. Das Stellelement 38 und das Gleitelement 37 sind so ausgelegt, dass in der anfänglichen, ersten Rastposition ihrer Rastmittel 24 und 26 ein Spielausgleich zwischen der ersten Gleitfläche 51 des Gleitelements 37 und der ihr gegenüberliegenden zweiten Gleitfläche 52 an der Innenseite des außen liegenden, zweiten Teils 2 gewöhnlich noch nicht erreicht ist. Eine solche Position ist in den Figuren 17 und 17a dargestellt.

Zum Spielausgleich wird das Stellelement 38 durch das Werkzeug weiter in der Betätigungsrichtung R bewegt, wobei die Zähne der Rastmittel 24 des Stellelements 38 über die Zähne der Rastmittel 26 an den Stegen 13 des Gleitelements 37 gleiten, bis zumindest ein vorläufiger Spielausgleich in einer fortgeschrittenen Rastposition der beiden Rastmittel 24 und 26 erreicht ist. Eine solche Position zwischen Stellelement 38 und Gleitelement 37 ist in den Figuren 18 und 18a gezeigt.

Durch Relativbewegung der beiden Teile 1 und 2 kann geprüft werden, ob ein optimaler Spielausgleich mit dem vorstehend beschriebenen Verfahren erreicht worden ist oder nicht. Im zuletzt genannten Fall können durch weitere Kraftbeaufschlagung des Betätigungsbereichs 46 die zweiten Anlageflächen 44 des Stellelements 38 gegen die ersten Anlageflächen 43 des Gleitelements 37 gepresst werden, bis eine weiter fortgeschrittene Rastposition zwischen den Rastmitteln 24 und 26 erreicht wird, mit der ein optimaler Spielausgleich vorliegt.

### Vorrichtung mit mindestens zwei relativ zueinander bewegbaren Teilen

### Bezugzeichenliste

- 1: erstes Teil
- 2: zweites Teil
- 3: Gleitlager
- 4: erste Gleitfläche
- 5: zweite Gleitfläche
- 6: Gleitelement
- 7: erste Anlagefläche
- 8: Stellelement
- 9: zweite Anlagefläche
- 10: dritte Anlagefläche
- 11: Ausnehmung
- 12: Vorsprung
- 13: Steg
- 14: Aufgleitschräge
- 15: Endbereich
- 16: Endbereich
- 17: Ausnehmung
- 18: Fläche
- 19: erste Auflagefläche
- 20: erste Auflagefläche
- 21: zweite Auflagefläche
- 22: zweite Auflagefläche
- 23: Seite
- 24: Rastmittel
- 25: Zahn
- 26: Rastmittel
- 27: Zahn
- 28: zungenartiges Element
- 29: Betätigungsbereich
- 30: Werkzeug
- 31: Auflauffläche
- 32: Anbindung
- 33: verbreiterte Bereich
- 34: Auflauffläche
- 35: Auflauffläche
- 36: Gleitlager
- 37: Gleitelement
- 38: Stellelement
- 39: Anbindung
- 40: Steg
- 41: Bereich
- 42: Bereich
- 43: erste Anlagefläche
- 44: zweite Anlagefläche
- 45: erster Bereich
- 46: Betätigungsbereich
- 47: zweiter Bereich
- 48: Brückenteil
- 49: Vorsprung
- 50: Ausnehmung
- 51: erste Gleitfläche
- 52: zweite Gleitfläche
- 53: fingerartiger Teil
- 54: Teil
- 55: Ausnehmung
- R: Betätigungsrichtung

## Patentansprüche

1. Vorrichtung mit mindestens zwei relativ zueinander entlang von Gleitflächen bewegbaren Teilen (1, 2), wobei an mindestens einem ersten Teil (1) ein Gleitlager (3; 36) mit einer ersten Gleitfläche (4; 51) angeordnet ist, die einer an einem zweiten Teil (2) vorgesehenen zweiten Gleitfläche (5; 52) gegenüberliegt, das Gleitlager (3; 36) ein Gleitelement (6; 37), an dem die erste Gleitfläche (4; 51) ausgebildet ist und an dessen von der ersten Gleitfläche (4; 51) wegweisenden Seite eine gegenüber der ersten Gleitfläche (4; 51) geneigte, erste Anlagefläche (7; 43) vorgesehen ist, und ein Stellelement (8; 38) umfasst, das mit einer zweiten Anlagefläche (9; 44) in einer Betätigungsrichtung (R)verschiebbar an der ersten Anlagefläche (7; 43) anliegt und sich dabei mit einer von der zweiten Anlagefläche (9; 44) wegweisenden dritten Anlagefläche (10) auf dem ersten Teil (1) abstützt, so dass durch Verschiebung des Stellelements (8; 38)in seiner Betätigungsrichtung (R) das Gleitelement (6; 37) mit der ersten Gleitfläche (4; 51) auf die zweite Gleitfläche (5; 52) des zweiten Teils (2) zu bewegbar ist, **dadurch gekennzeichnet, dass** das erste Teil (1) außerhalb seines Bereichs, in dem sich das Stellelement (8; 38) mit der dritten Anlagefläche (10) auf dem ersten Teil (1) abstützt, eine Ausnehmung (11; 50) aufweist, in der ein am Gleitelement (6; 37) angeordneter Vorsprung (12; 49) in Betätigungsrichtung (R) der Verschiebung des Stellelements (8; 38) formschlüssig gelagert ist.

2. Vorrichtung nach Anspruch 1, **dadurch gekennzeichnet, dass** der Vorsprung (12; 49) in Richtung auf das zweite Teil (2) hin verschiebbar in der Ausnehmung gelagert ist.

3. Vorrichtung nach Anspruch 1 oder 2, **dadurch gekennzeichnet, dass** das Gleitelement (6; 37) plattenförmig ausgebildet ist, wobei an dessen einer größeren Seitenfläche die erste Gleitfläche (4; 51) und an dessen gegenüberliegender anderen größeren Seitenfläche der Vorsprung (12; 49) angeordnet sind.

4. Vorrichtung nach einem der Ansprüche 1 bis 3, **dadurch gekennzeichnet, dass** das Gleitelement (6) mehrere erste Anlageflächen (7) und diesen zugeordnete Stellelemente (8) umfasst.

5. Vorrichtung nach einem der Ansprüche 1 bis 3, **dadurch gekennzeichnet, dass** das Gleitelement (37) mehrere erste Anlageflächen (43) und das Stellelement (38) mehrere diesen zugeordnete zweite Anlageflächen (44) umfasst.

6. Vorrichtung nach einem der Ansprüche 1 bis 5, **dadurch gekennzeichnet, dass** die erste Anlagefläche (43) und zweite Anlagefläche (44) gegenüber der Längsrichtung der Relativverschiebung der beiden Teile (1,2) geneigt sind.

7. Vorrichtung nach Anspruch 6, **dadurch gekennzeichnet, dass** das Stellelement (8; 38) am oder im Gleitelement (6; 37) in seiner Betätigungsrichtung (R) derart geführt ist, dass eine zur Betätigungsrichtung (R)entgegengesetzte Bewegung durch eine Widerstandskraft gehemmt oder blockiert ist.

8. Vorrichtung nach Anspruch 7, **dadurch gekennzeichnet, dass** die Widerstandskraft durch am Gleitelement (6; 37) und Stellelement (8; 38) angeordnete, zusammenwirkende Rastmittel (24, 26) erzeug ist, wobei die Rastmittel (24, 26) als Verzahnungen ausgebildet sind.

9. Vorrichtung nach Anspruch 8, **dadurch gekennzeichnet, dass** das am Stellelement (8; 38) angeordnete Rastmittel (24) in einem Bereich der von der zweiten Anlagefläche (9; 44) abgewandten Seite des Stellelements (8; 38) ausgebildet ist.

10. Vorrichtung nach Anspruch 9, **dadurch gekennzeichnet, dass** das am Stellelement (38) angeordnete Rastmittel (24), in Betätigungsrichtung (R) des Stellelements (38) gesehen, in einem gegenüber der zweiten Anlagefläche (44) seitlich versetzten Bereich des Stellelements (38) ausgebildet ist.

11. Vorrichtung nach Anspruch 10, **dadurch gekennzeichnet, dass** der seitliche Bereich an einem sich in Betätigungsrichtung (R)des Stellelements (38) erstreckenden fingerartigen Teil (53) angeordnet ist.

12. Vorrichtung nach einem der Ansprüche 8 bis 11, **dadurch gekennzeichnet, dass** der am Gleitelement (6; 37) angeordnete Vorsprung (12; 49) das Stellelement (8; 38) im Bereich des Rastmittels (24) des Stellelements (8; 38) mit einem Steg (13) übergreift, an dem das Rastmittel (26) des Gleitelements (6; 37) angeordnet ist.

13. Vorrichtung nach Anspruch 12, **dadurch gegekennzeichnet**, dass das Stellelement (8; 38) an der vom Rastmittel (24) abgewandten Seite eine in Betätigungsrichtung (R) zu der das Rastmittel (24) aufweisenden Seite hin geneigt verlaufende erste Auflagefläche (19, 20) aufweist und das Gleitelement (6; 37) eine in Betätigungsrichtung(R) des Stellelements (8; 38) zu der den Vorsprung (12; 49) aufweisenden Seite hin verlaufende, mit der ersten Auflagefläche (19, 20) zusammenwirkende zweite Auflagefläche (21, 22) aufweist, so dass bei Verschiebung des Stellelements (8; 38) in Betätigungsrichtung (R) die Rastmittel (24, 26) gegeneinander führbar sind.

14. Vorrichtung nach einem der Ansprüche 1 bis 13, **dadurch gekennzeichnet, dass** das Stellelement (8; 38) einen Betätigungsbereich (29; 46) aufweist, der zwischen dem ersten und zweiten Teil (1, 2) angeordnet und von außen her zugänglich ist, derart, dass durch Beaufschlagung des Betätigungsbereichs (29; 46) mit einem geeigneten Werkzeug (30) das Stellelement (8; 38)in Betätigungsrichtung (R) bewegbar und die zweite Anlagefläche (9; 44) längs der ersten Anlagefläche (7; 43) zum Spielausgleich zwischen den beiden Teilen (1,2) verschiebbar ist.

15. Vorrichtung nach einem der Ansprüche 1 bis 14, **dadurch gekennzeichnet, dass** sie als Teleskopsäule mit mindestens zwei ineinander angeordneten rohrförmigen Teilen (1,2)ausgebildet ist, die in Längsrichtung entlang ihrer Gleitflächen (4, 5; 51, 52) relativ zueinander verschiebbar sind.

16. Vorrichtung nach Anspruch 15, **dadurch gekennzeichnet, dass** das erste und zweite Teil (1, 2) im Wesentlichen rechteckige Querschnitte und somit im Wesentlichen flache gegenüberliegende Seiten aufweisen.

17. Vorrichtung nach Anspruch 16, **dadurch gekennzeichnet, dass** an mindestens zwei aneinander angrenzenden Seiten des ersten Teils (1) jeweils zwei in Querrichtung voneinander beabstandete und spiegelbildlich zu der in Längsrichtung verlaufenden senkrechten Mittelebene der betreffenden Seite angeordnete Gleitlager (3) vorgesehen sind.

18. Vorrichtung nach den Ansprüchen 4 und 17, **dadurch gekennzeichnet, dass** das Gleitelement (6) jedes Gleitlagers (3) zwei in Längsrichtung der Teleskopsäule im Abstand zueinander angeordnete und in Querrichtung zu der betreffenden Seite hin geneigte erste Anlageflächen (7) aufweist, die mit den zweiten Anlageflächen (9) jeweils eines in Querrichtung verschiebbaren Stellelements (8) zusammenwirken.

19. Vorrichtung nach den Ansprüchen 5 und 16, **dadurch gekennzeichnet, dass** mindestens zwei aneinander grenzende Seiten des ersten Teils (1) mit jeweils einem Gleitlager (36) versehen sind, dessen Gleitelement (37) zwei miteinander verbundene und in Längsrichtung der Teleskopsäule voneinander beabstandete Bereiche (41, 42) aufweist, wobei jeder Bereich (41, 42) in Querrichtung voneinander beabstandete und in Längsrichtung der Teleskopsäule zu der betreffenden Seite hin geneigte erste Anlageflächen (43) aufweist, die mit den zweiten Anlageflächen (44) eines in Längsrichtung der Teleskopsäule verschiebbaren Stellelements (38) zusammenwirken.

20. Vorrichtung nach den Ansprüchen 14 und 19, **dadurch gekennzeichnet, dass** das Stellelement (38) einen mit einem der Bereiche(41) des Gleitelements (37) zusammenwirkenden ersten Bereich (45), an dessen einer Stirnseite der Betätigungsbereich (46) ausgebildet ist, und einen mit dem anderen Bereich (42) des Gleitelements (37) zusammenwirkenden zweiten Bereich (47) aufweist, der mit dem ersten Bereich (45) über ein Brückenteil (48) verbunden ist, wobei sich das Brückenteil (48) zwischen den beiden zum ersten Bereich des Stellelements (38) benachbarten ersten Anlageflächen (43) des Gleitelements (37) erstreckt.

21. Vorrichtung nach Anspruch 20, **dadurch gekennzeichnet, dass** das Gleitlager (36) zumindest im Fertigungszustand einstückig ausgebildet ist, wobei das Gleitelement (37) und das Stellelement (38) über Anbindungen (39) mit einander verbunden sind und wobei im Fertigungszustand der erste und zweite Bereich (45, 47) des Stellelements (38) in Längsrichtung der Teleskopsäule von den beiden jeweils mit ihnen zusammenwirkenden Bereichen (41, 42) des Gleitelements (37) beabstandet angeordnet sind, derart, dass bei Verschiebung des Stellelements (38) in Längsrichtung der Teleskopsäule relativ zum Gleitelement (37) durch Kraftbeaufschlagung des Betätigungsbereichs (46) die Anbindungen (32) reißen oder so gedehnt werden, dass die zweiten Anlagenflächen (44) des ersten und zweiten Bereichs (45, 47) des Stellelements (38) auf die ersten Anlagenflächen (43) in den beiden Bereichen (41, 42) des Gleitelements (37) aufschiebbar sind.

## Claims

1. Device with at least two parts (1, 2) moving relative to each other along sliding surfaces, where a sliding bearing (3; 36) with a first sliding surface (4; 51) is located on at least one first part (1), said first sliding surface (4; 51) lying opposite a second sliding surface (5; 32) provided on a second part (2), the sliding bearing (3; 36) comprises a sliding element (6; 37) on which the first sliding surface (4; 51) is formed, and on the side of which facing away from the first sliding surface (4; 51) a first contact surface (7; 43), inclined relative to the first sliding surface (4; 51), is provided, and an adjusting element (8; 38) having a second contact surface (9; 44) that lies on the first contact surface (7; 43) in a manner permitting displacement in a direction of actuation (R) and, in this context, is supported on the first part (1) by a third contact surface (10), facing away from the second contact surface (9; 44), such that, by displacing the adjusting element (8; 38) in its direction of actuation (R), the sliding element (6; 37) with the first sliding surface (4; 51) can be moved towards the second sliding surface (5; 52) of the second part (2), **characterized in that** the first part (1) displays a recess (11; 50), located outside the area in which the adjusting element (8; 38) is supported on the first part (1) by the third contact surface (10), in which a projection (12; 49) located on the sliding element (6; 37) is mounted in positive fashion in the direction of actuation (R) of the displacement of the adjusting element (8; 38).

2. Device according to Claim 1, **characterized in that** the projection (12; 49) is mounted in the recess in a manner permitting displacement towards the second part (2).

3. Device according to Claim 1 or 2, **characterized in that** the sliding element (6; 37) is of plate-like design, where the first sliding surface (4; 51) is located on one of its larger side surfaces, the projection (12; 49) being located on its opposite, other larger side surface.

4. Device according to one of the Claims 1 to 3, **characterized in that** the sliding element (6) comprises multiple first contact surfaces (7) and associated adjusting elements (8).

5. Device according to one of the Claims 1 to 3, **characterized in that** the sliding element (37) comprises multiple first contact surfaces (43), and the adjusting element (38) comprises multiple associated second contact surfaces (44).

6. Device according to one of the Claims 1 to 5, **characterized in that** the first contact surface (43) and the second contact surface (44) are inclined in relation to the longitudinal direction of the relative displacement of the two parts (1, 2).

7. Device according to Claim 6, **characterized in that** the adjusting element (8; 38) is guided on or in the sliding element (6; 37) in its direction of actuation (R) in such a way that movement opposite to the direction of actuation (R) is inhibited or blocked by a resistance.

8. Device according to Claim 7, **characterized in that** the resistance is generated by interacting snap-in means (24, 26), located on the sliding element (6; 37) and the adjusting element (8; 38), where the snap-in means (24, 26) are designed as teeth.

9. Device according to Claim 8, **characterized in that** the snap-in means (24) located on the adjusting element (8; 38) is provided in an area of the side of the adjusting element (8; 38) facing away from the second contact surface (9; 44).

10. Device according to Claim 9, **characterized in that**, seen in the direction of actuation (R) of the adjusting element (38), the snap-in means (24) located on the adjusting element (38) is provided in an area of the adjusting element (38) that is laterally offset in relation to the second contact surface (44).

11. Device according to Claim 10, **characterized in that** the lateral area is located on a finger-like part (53) extending in the direction of actuation (R) of the adjusting element (38).

12. Device according to one of the Claims 8 to 11, **characterized in that** the projection (12; 49) located on the sliding element (6; 37) reaches over the adjusting element (8; 38) in the area of the snap-in means (24) of the adjusting element (8; 38) by means of a web (13) on which the snap-in means (26) of the sliding element (6; 37) is located.

13. Device according to Claim 12, **characterized in that**, on the side facing away from the snap-in means (24), the adjusting element (8; 38) displays a first supporting surface (19, 20) that is inclined towards the side displaying the snap-in means (24) in the direction of actuation (R), and the sliding element (6; 37) displays a second supporting surface (21, 22) that runs towards the side displaying the projection (12; 49) in the direction of actuation (R) of the adjusting element (8; 38) and interacts with the first supporting surface (19, 20), such that the snap-in means (24, 26) can be guided against each other when the adjusting element (8; 38) is displaced in the direction of actuation (R).

14. Device according to one of the Claims 1 to 13, **characterized in that** the adjusting element (8; 38) displays an actuating area (29; 46), which is located between the first and second part (1, 2) and accessible from the outside, such that the adjusting element (8; 38) can be moved in the direction of actuation (R), and the second contact surface (9; 44) displaced along the first contact surface (7; 43), to compensate for the play between the two parts (1, 2), by applying pressure to the actuating area (29; 46) with a suitable tool (30).

15. Device according to one of the Claims 1 to 14, **characterized in that** it is designed as a telescopic column with at least two tubular parts (1, 2) that are located one inside the other and can be displaced relative to each other along their sliding surfaces (4, 5; 51, 52) in the longitudinal direction.

16. Device according to Claim 15, **characterized in that** the first and the second part (1, 2) display essentially rectangular cross-sections and thus essentially flat opposite sides.

17. Device according to Claim 16, **characterized in that** at least two adjacent sides of the first part (1) are each provided with two sliding bearings (3), spaced apart from each other in the transverse direction and in a mirror-inverted arrangement relative to the perpendicular center plane of the corresponding side running in the longitudinal direction.

18. Device according to Claims 4 and 17, **characterized in that** the sliding element (6) of each sliding bearing (3) displays two first contact surfaces (7) that are spaced apart from each other in the longitudinal direction of the telescopic column, inclined towards the corresponding side in the transverse direction, and interact with the second contact surfaces (9) of an adjusting element (8) that can be displaced in the transverse direction.

19. Device according to Claims 5 and 16, **characterized in that** at least two adjacent sides of the first part (1) are each provided with a sliding bearing (36), the sliding element (37) of which displays two areas (41, 42), connected to each other and spaced apart in the longitudinal direction of the telescopic column, where each area (41, 42) displays first contact surfaces (43) that are spaced apart in the transverse direction, inclined towards the corresponding side in the longitudinal direction of the telescopic column, and interact with the second contact surfaces (44) of an adjusting element (38) that can be displaced in the longitudinal direction of the telescopic column.

20. Device according to Claims 14 and 19, **characterized in that** the adjusting element (38) displays a first area (45) interacting with one of the areas (41) of the sliding element (37), on the one face end of which the actuating area (46) is provided, and a second area (47) interacting with the other area (42) of the sliding element (37), which is connected to the first area (45) by a bridge part (48), in which context the bridge part (48) extends between the two first contact surfaces (43) of the sliding element (37) adjacent to the first area of the adjusting element (38).

21. Device according to Claim 20, **characterized in that** the sliding bearing (36) is of one-piece design, at least in its as-manufactured condition, where the sliding element (37) and the adjusting element (38) are joined to each other via connections (39), and where, in the as-manufactured condition, the first and the second area (45, 47) of the adjusting element (38) are located a distance apart from the two areas (41, 42) of the sliding element (37) respectively interacting with them in the longitudinal direction of the telescopic column, such that, when the adjusting element (38) is displaced in the longitudinal direction of the telescopic column relative to the sliding element (37) by applying pressure to the actuating area (46), the connections (32) break or are stretched in such a way that the second contact surfaces (44) of the first and second area (45, 47) of the adjusting element (38) can be slid onto the first contact surfaces (43) in the two areas (41, 42) of the sliding element (37).

## Revendications

1. Dispositif doté d'au moins deux éléments (1, 2) mobiles l'un par rapport à l'autre le long de surfaces de glissement, dans lequel dispositif est disposé sur au moins un premier élément (1) un palier lisse (3; 36) avec une première surface de glissement (4; 51) disposée en vis-à-vis d'une deuxième surface de glissement (5; 52) prévue sur un deuxième élément (2), le palier lisse (3; 36) comprenant un élément glisseur (6; 37) auquel est formée la première surface de glissement (4; 51) et sur son côté détourné de la première surface de glissement (4; 51) est prévue une première surface de contact (7; 43) inclinée par rapport à la première surface de glissement, et comprenant un élément de commande (8; 38) qui s'applique contre la première surface de contact (7; 43) par une deuxième surface de contact (9; 44) de manière mobile dans un sens d'actionnement (R) et en appuyant sur le deuxième élément (1) par une troisième surface de contact (10) détournée de la deuxième surface de contact (9; 44) de sorte que par le déplacement de l'élément de commande (8; 38) dans son sens d'actionnement (3), l'élément glisseur (6; 37) peut être mu, avec la première surface de glissement, vers la deuxième surface de glissement (5; 52) du deuxième élément, ***caractérisé* en ce que**, à l'extérieur de sa zone dans laquelle l'élément de commande (8; 38) s'appuie sur le premier élément (1) par sa troisième surface de contact (10), le premier élément (1) comporte un évidement (11; 50) dans lequel est logé par forme une projecture (12; 49) disposée sur l'élément glisseur (6; 37) dans le sens d'actionnement de l'élément de commande (8; 38).

2. Dispositif selon la revendication 1, ***caractérisé* en ce que** la projecture (12; 49) est logée dans l'évidement de manière déplaçable vers le deuxième élément (2).

3. Dispositif selon la revendication 1 ou 2, ***caractérisé* en ce que** l'élément glisseur (6; 37) est en forme de plaque et que sur l'une de ses faces latérales plus grandes est disposée la première surface de glissement (4; 51) et sur l'autre face latérale opposée de ses faces latérales plus grandes est disposée la projecture (12; 49).

4. Dispositif selon l'une des revendications 1 à 3, ***caractérisé* en ce que** l'élément glisseur (6) comporte plusieurs de premières surfaces de contact (7) et éléments de commande (8) associés à celles-ci.

5. Dispositif selon l'une des revendications 1 à 3, ***caractérisé* en ce que** l'élément glisseur (37) comporte plusieurs de premières surfaces de contact (43) et l'élément de commande (38) comporte plusieurs deuxièmes surfaces de contact (44) associées à celles-ci.

6. Dispositif selon l'une des revendications 1 à 5, ***caractérisé* en ce que** la première surface de contact (43) et la deuxième surface de contact (44) sont inclinées par rapport au sens longitudinal du déplacement relatif des deux éléments (1, 2).

7. Dispositif selon la revendication 6, ***caractérisé* en ce que** concernant son sens d'actionnement (R), l'élément de commande (8; 38) est guidé sur ou dans l'élément glisseur (6; 37) de sorte qu'un mouvement opposé au sens d'actionnement (R) est freiné ou bloqué par une résistance.

8. Dispositif selon la revendication 7, ***caractérisé* en ce que** la résistance est générée par des dispositifs de verrouillage (24, 26) coopérants disposés sur l'élément glisseur (6; 37) et sur l'élément de commande (8; 38), lesdits dispositifs de verrouillage (24, 26) étant construits comme des dentures.

9. Dispositif selon la revendication 8, ***caractérisé* en ce que** le dispositif de verrouillage (24) disposé sur l'élément de commande (8; 38) est formé dans une partie du face de l'élément de commande (8; 38) détourné de la deuxième surface de contact (9; 44).

10. Dispositif selon la revendication 9, ***caractérisé* en ce que** le dispositif de verrouillage (24) disposé sur l'élément de verrouillage (38) est formé dans une partie décalée latéralement par rapport à la deuxième surface de contact (44), vu en sens d'actionnement (R) de l'élément de commande (38).

11. Dispositif selon la revendication 10, ***caractérisé* en ce que** la partie latérale est disposée sur une pièce en forme de doigt (53) qui s'étend en sens d'actionnement (R) de l'élément de commande (38).

12. Dispositif selon l'une des revendications 8 à 11, ***caractérisé* en ce que** la projecture (12; 49) disposée sur l'élément glisseur (6; 37) chevauche l'élément de commande (8; 38) dans la partie du dispositif de verrouillage (24) de l'élément de commande (8; 38) par une traverse (13) sur laquelle est disposé le dispositif de verrouillage (26) de l'élément glisseur (6; 37).

13. Dispositif selon la revendication 12, ***caractérisé* en ce que** sur le côté détourné du dispositif de verrouillage (24), l'élément de commande (8; 38) comporte une première surface de support (19, 20) inclinée vers la face comportant le dispositif de verrouillage (24) en sens d'actionnement (R), et l'élément glisseur (6; 37) comporte une deuxième surface de support (21, 22) s'étendant, en sens d'actionnement, vers la face comportant la projecture (12; 49) de l'élément de commande (8; 38) et coopère avec la première surface de support (21, 22) de sorte que lors du déplacement de l'élément de commande (8; 38) en sens d'actionnement (R) les dispositifs de verrouillage (24, 26) peuvent être guidés l'un contre l'autre.

14. Dispositif selon l'une des revendications 1 à 13, ***caractérisé* en ce que** l'élément de commande (8; 38) comporte une partie d'actionnement (29; 46) qui est disposée entre le premier et le deuxième élément (1, 2) et qui est accessible de l'extérieur de sorte que par l'application d'un outil approprié (30) à la partie d'actionnement (29; 46), l'élément de commande (8; 38) peut être mu en sens d'actionnement (R) et la deuxième surface de contact (9; 44) peut être déplacé entre les deux éléments (1, 2) pour compenser un jeu entre les deux éléments (1, 2).

15. Dispositif selon l'une des revendications 1 à 14, ***caractérisé* en ce que** celui-ci est formé comme une colonne télescopique avec au moins deux éléments (1, 2) disposés l'un à l'intérieur de l'autre, éléments qui sont déplaçable l'un par rapport à l'autre le long de ses surfaces de glissement (4, 5; 51, 52) en sens longitudinal.

16. Dispositif selon la revendication 15, ***caractérisé* en ce que** le premier et le deuxième élément (1, 2) présentent des sections transversales essentiellement rectangulaires et ainsi des faces opposées essentiellement plaines.

17. Dispositif selon la revendication 16, ***caractérisé* en ce que** sur au moins deux faces adjacentes l'une à l'autre du premier élément (1), il sont respectivement prévus deux paliers lisses (3) écartés l'un de l'autre en sens transversal et s'étendant de manière renversée au plan central vertical s'étendant en sens longitudinal de la face respective.

18. Dispositif selon les revendications 4 et 17, ***caractérisé* en ce que** l'élément glisseur (6) du chacun palier lisse (3) comporte deux surfaces de contact (7) écartées l'une de l'autre en sens longitudinal de la colonne télescopique et inclinées vers la face intéressante en sens transversal, lesdites surfaces de contact respectivement coopérant avec les deuxièmes surfaces de contact (9) d'un élément de commande (8) respectif déplaçable en sens transversal.

19. Dispositif selon les revendications 5 et 16, ***caractérisé* en ce qu'**au moins deux faces adjacentes du premier élément (1) sont respectivement munies d'un palier lisse (36) dont l'élément glisseur (37) comporte deux parties (41, 42) reliées l'une avec l'autre et écartées l'une de l'autre en sens longitudinal de la colonne télescopique, chacune des parties (41, 42) comportant des premières surfaces de contact (43) écartées l'une de l'autre en sens transversale et inclinées vers la face intéressante en sens longitudinal de la colonne télescopique, lesdites premières surfaces de contact coopérant avec les deuxièmes surfaces de contact (44) d'un élément de commande (38) déplaçable en sens longitudinal de la colonne télescopique.

20. Dispositif selon les revendications 14 et 19, ***caractérisé* en ce que** l'élément de commande (38) comporte une première partie (45) coopérant avec l'une des parties (41) de l'élément glisseur (37), sur l'une des faces de ladite première partie (45) est formée la partie d'actionnement (46), et comporte une deuxième partie (47) coopérant avec l'autre partie (42) de l'élément glisseur (37) et reliée avec la première partie (45) par un élément de pont (48), ledit élément de pont (48) s'étendant entre les deux premières surfaces de contact (43) de l'élément glisseur (37) adjacentes à la première partie de l'élément de commande (38).

21. Dispositif selon la revendication 20, ***caractérisé* en ce que** le palier lisse (36) est formé en une pièce au moins en état de fabrication, l'élément glisseur (37) et l'élément de commande (38) étant reliés l'un avec l'autre par des liaisons (39) et la première et la deuxième partie (45, 47) de l'élément de commande (38), en état de fabrication, étant écartées des deux parties (41, 42) de l'élément glisseur (37) respectivement coopérant avec celles-ci en sens longitudinal de la colonne télescopique de sorte que lors du déplacement de l'élément de commande (38) en sens longitudinal de la colonne télescopique par rapport à l'élément glisseur (37), lesdites liaisons (32) se rompent ou s'étirent de sorte que les deuxièmes surfaces de contact (44) de la première et de la deuxième partie (45, 47) de l'élément de commande (38) peuvent glisser sur les premières surfaces de contact (43) dans les deux parties (41, 42) de l'élément glisseur (37).
